# EUROPEAN PATENT APPLICATION

(11) **EP 1 206 062 A2**
(43) Date of publication of application: **15.05.2002**
(21) Application number: 01126782.0
(22) Date of filing: 09.11.2001
(51) Int. Cl.: H04L 1/18

(54) **Data communication system, data communication method, and recording medium with data communication program recorded thereon**

(30) Priority: 09.11.2000 JP 2000341680
(71) Applicant: NEC CORPORATION, Tokyo (JP)
(72) Inventor: Takeda, Kenji, Minato-ku, Tokyo (JP)
(74) Representative: Glawe, Delfs, Moll & Partner

(57) **Abstract**

A counter for counting the number of round trips of transmission data segments is introduced into a transmitter in a communication system comprising a transmitter, a receiver, and a network for connecting the transmitter to the receiver. Data segment transmission processing means transmits a data segment after the addition of the counter value to the data segment. ACK transmission means adds the counter value, contained in the received data segment, to an ACK message, followed by the return of the ACK message. When the counter value added to the received ACK message is equal to the current counter value, ACK processing means increases the counter value by one to count the number of round trips. The data segment transmission processing means stores the relationship between the data segment and the added counter value at the point of data segment transmission, and, when the stored counter value is two or more smaller than the current counter value, retransmits the data segment. By virtue of the above construction, even when a retransmitted data segment has been lost, a deterioration in throughput between the transmitter and the receiver can be avoided.

## Description

### FIELD OF THE INVENTION

The invention relates to a data communication device, a data communication system, a data communication method, and a recording medium with a data communication program recorded thereon, and more particularly to a data communication device, a data communication system, a data communication method, and a recording medium with a data communication program recorded thereon, which are suitable for use in packet transfer error control by retransfer through an OSI (open system interconnection) reference model fourth layer protocol or an Internet transport layer protocol.

### BACKGROUND OF THE INVENTION

At the present time, in the Internet which is the most popular data communication infrastructure, a communication protocol TCP (transmission control protocol) specified in "Transmission Control Protocol," Request For Comments (hereinafter referred to as "RFC") 793 by Internet Engineering Task Force in U.S.A. (reference A) and "Requirements for Internet Hosts -- Communication Layers," RFC 1122, ibid. is widely used as a transport layer protocol which can provide a reliability assured data delivery service.

In order to assure reliability, TCP comprises: an accumulation confirmation notification mechanism which permits a data receiver TCP processor (hereinafter referred to as "receiver TCP") to notify data sender TCP processor (hereinafter referred to as "sender TCP") of an accumulation confirmation message (ACK (acknowledge) message); and an error control mechanism which performs delivery confirmation, based on the notified ACK message, executed by the sender TCP and loss detection and retransmission of data segment through a retransmission timer by the sender TCP. The sender TCP can learn the number of the final data byte in data, which has arrived at the receiver TCP without missing since the start of data transmission, through the ACK message notified by the receiver TCP. By virtue of this, the delivery of the already transmitted data segment to the receiver TCP can be confirmed. Further, the sender TCP starts a retransmission timer at the time of the transmission of the data segment and, when the delivery of the data segment cannot be confirmed by the time-out of the retransmission timer, regards the data segment as being lost and retransmits the data segment. In TCP, however, the occurrence of congestion within the network is assumed to be the main cause of the loss of the data segment. For this reason, in retransmitting the lost segment and in transmitting a subsequent data segment, the control of the data segment transmission speed, that is, congestion control, is carried out from the viewpoint of relaxing the congestion within the network causative of the data segment loss. Two congestion control mechanisms, called slow start and congestion avoidance, are defined in TCP specified in RFC 793 and RFC 1122.

The slow start is control which is applied upon the time-out of the retransmission timer. In this case, the sender TCP sets the size of a transmission window, called a congestion window (cwnd), to one maximum segment size (MSS), and transmission (retransmission) is started from data which is located next to data for which the accumulation has been confirmed up to this stage. Further, in this control, every time when the delivery of a data segment transmitted after that has been confirmed, cwnd is increased by the size of 1 MSS. The congestion avoidance is control which is applied from the time when the size of cwnd in the slow start has exceeded the half of the cwnd size at the time of the time-out of the retransmission timer. In this control, every time when the delivery of a data segment having a size of cwnd has been confirmed, the size of cwnd is increased by 1 MSS. The upper limit value in the transmission of data, for which the delivery has not been confirmed from the receiver, by the sender TCP is specified by a smaller value selected from the cwnd value and the value in the window size field in the TCP header notified by the receiver TCP. Therefore, when the widow size field value notified by the receiver TCP is satisfactorily large, the cwnd value becomes a substantial transmission window size. In this case, control by the slow start and congestion avoidance algorithm governs the throughput performance of TCP. For this reason, in the case of a satisfactorily large window size field value, TCP, in the case where the data segment has been lost, is operated as follows. The sender TCP detects data segment loss through the time-out of the retransmission timer, reduces cwnd to a size of one data segment, retransmits the detected lost data segment, and temporarily significantly lowers the traffic introduction speed at that time. Thereafter, the sender TCP rapidly increases the traffic introduction speed by rapidly exponentially increasing the size of cwnd by slow start algorithm until the size of cwnd becomes the half of the size of cwnd at the time of the time-out of the retransmission timer. Thereafter, the throughput is relatively slowly recovered by the congestion avoidance algorithm. The reason why, upon the data segment loss, the recovery speed is rendered lower than the throughput suppression speed, is for avoiding such an unstable state that, due to the present control, the network repeats a congested state and an uncongested state.

The slow start and the congestion avoidance require a lot of time for the detection of data segment loss and, in addition, require a lot of time for the recovery of the cwnd size. For this reason, for example, methods for enhancing the efficiency of error control after the loss of a data segment, that is, a method for shortening the detection time of the loss of a data segment by the sender TCP and a method for enhancing the efficiency of retransmission control, have been developed from the viewpoint of improving the throughput performance of TCP.

In one packaging of TCP called "TCP Reno," a technique called fast retransmission & fast recovery (hereinafter referred to as "FR & FR") described in "TCP Congestion Control," RFC 2581 (reference B) has been introduced. In the fast retransmission (hereinafter referred to as "FRet"), through the sender TCP's reception of a specified number of "ACK segments identical to each other in content" (hereinafter referred to as "duplicate ACK") which have been transmitted by the receiver TCP upon the reception of data segments after the lost data segment, the sender TCP detects the loss of a data segment, which is located next to data for which the duplicate ACK indicates the confirmation of delivery, and, immediately after that, retransmits the lost data segment. In this case, the reason why the sender TCP waits for the reception of a specified number of duplicate ACKs rather than immediate retransmission of the lost data segment upon the reception of duplicate ACK is for lowering the probability of erroneously retransmitting unnecessary data segments upon the reception of duplicate ACK from the receiver TCP sent in the case where the order of arrival of transmitted data segments at the receiver TCP has changed. Further, in the fast recovery (hereinafter referred to as "FRec"), since the reception of duplicate ACK by the sender TCP indicates that the transmitted data segment has been received by the receiver TCP, the sender TCP, after retransmission upon the reception of duplicate ACK, releases a transmission window by an extent corresponding to one data segment upon the reception of duplicate ACK. When this provides a room for newly transmitting a data segment, the succeeding data segment is transmitted. This is applied during error control processing until the delivery of the retransmitted data segment is confirmed. In this case, the sender TCP performs control in such a manner that, for relaxation of the congestion in the network, the transmission window is kept at a value which is substantially half of the value of cwnd at the time of retransmission. As soon as the delivery of the retransmitted data segment has been confirmed, the error control of FRec is ended and the congestion avoidance is started from a cwnd value which is the half of the cwnd value at the time of the retransmission.

The above-described FR & FR is useful in the case where, in the successive transmission of data segments by the sender TCP, one data segment in the transmitted data segments sent within one transmission window size has been lost. In this case, as compared with the retransmission control and the congestion control by using the retransmission timer and the slow start and congestion avoidance, the loss of the data segment can be detected in an earlier stage, the lost data segment can be retransmitted in an earlier stage, the retransmission control is ended while maintaining the cwnd size at a relatively large value, followed by return to a usual communication state. Therefore, the throughput performance of TCP is improved.

In the fast retransmission & fast recovery, however, when a plurality of data segments transmitted in one transmission window have been lost, in some cases, a plurality of times of start in the fast retransmission by each lost data segment occur. In this case, each of the cwnd values is reduced to the half of the original value, that is, the cwnd values are reduced. Thereafter, upon the loss of each data segment, when the sender TCP cannot receive the specified number of duplicate ACKs, the detection of loss by the time-out of the retransmission timer becomes necessary, and the throughput performance of TCP is sometimes not very improved by the subsequent slow start and congestion avoidance. In order to solve this problems, two solutions, i.e., an improvement in fast recovery described in "The NewReno Modification to TCP's Fast Recovery Algorithm," RFC 2582 (reference C) and the application of TCP SACK (selective acknowledgments) option described in "TCP Selective Acknowledgment Options," RFC 2018 (reference D) have been proposed.

In the conventional fast retransmission, during the error control processing in the sender TCP, that is, during the fast recovery, upon the reception of a specified number of duplicate ACKs different from ACKs received up to this stage in content, the fast retransmission & fast recovery has been again executed, whereas, in the improvement in fast recovery described in the reference C, under the same situation, the sender TCP does not execute the fast retransmission and, upon the detection of the loss of a data segment located next to the updated delivery confirmation data segment based on the reception of ACK different from the duplicate ACK received up to this stage in content (wherein the delivery confirmation data segment notified by the duplicate ACK has been updated) (hereinafter referred to as "partial ACK"), the detected lost segment is retransmitted.

In the TCP SACK option described in the reference D, the accumulation of the data segment received by the receiver TCP is confirmed, and, in addition, data segments received after the accumulation confirmed data segment are reported. The sender TCP utilizes this information to detect the loss of a data segment in an early stage and to avoid the retransmission of useless data segments, whereby the throughput performance can be improved.

The operation logic for improving the fast recovery described in the reference C is packaged in one form of package in TCP called TCP NewReno. Regarding the TCP SACK option, for example, the construction of option field is described in the reference D. However, the operation of the sender TCP upon the reception of the SACK option depends upon the package, and there are various packages. Several packaging systems are described, for example, in Fall, K. and Floyd, S., "Simulation-based Comparison of Tahoe, Reno and SACK TCP," U.S.A. Association for Computing Machinery (ACM) Computer Communication Review, V. 26, N. 3, pp. 5 - 21 July, 1996 (reference E).

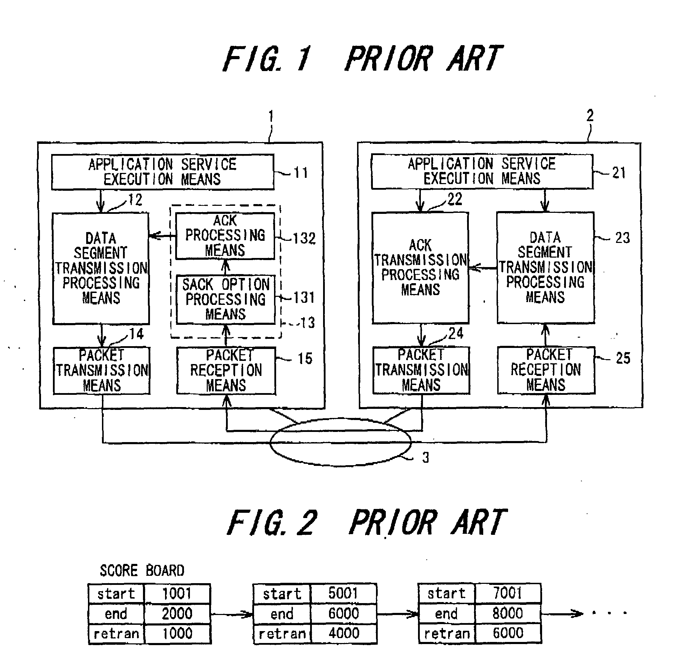

Here TCP techniques using the SACK option described in the reference E will be explained in conjunction with Figs. 1 to 6.

As shown in Fig. 1, the systems according to the conventional techniques comprise a transmitter 1, a receiver 2, and a network 3. The transmitter 1 is connected to the receiver 2 through the network 3. The transmitter 1 comprises application service execution means 11, data segment transmission processing means 12, ACK reception processing means 13, packet transmission means 14, and packet reception means 15. The receiver 2 comprises application service execution means 21, ACK transmission processing means 22, data segment reception processing means 23, packet transmission means 24, and packet reception means 25.

The application service execution means 11 and the application service execution means 21 function in pair to provide services to users. Basically, the application service execution means 11 transfers data to the application execution means 21 to realize a service. For example, a web browser and a web server in pair and an FTP (file transfer protocol) client and an FTP server in pair correspond to this, although the function varies depending upon the direction of data flow. The packet transmission means 14 and the packet transmission means 24 each function to transmit a TCP segment, which has been received from the upper rank unit, to a counter side through the network 3 and correspond to an aggregate of an IP (Internet protocol) protocol stack, an MAC (media access control) driver. and NIC (network interface card). The packet reception means 15 and the packet reception means 25 each function to receive a packet sent from the counter side through the network 3, and, likewise, correspond to an aggregate of an IP protocol stack, MAC driver, and NIC.

The network 3 is an IP network comprising a data link, such as Ethernet and a router. The data segment transmission processing means 12, the ACK reception processing means 13, the ACK transmission means 22, and the data segment reception processing means 23 function to perform protocol processing for handing data, received from the application service execution means 11, to the application execution means 21 without fail. The data segment transmission processing means 12 and the ACK reception processing means 13 correspond to a data segment transmission processor of TCP, and the ACK transmission processing means 22 and the data segment reception processing means 23 correspond to a data segment reception processor of TCP.

The data segment transmission processing means 12 basically functions to accumulate data, received from the application service execution means 11, in a transmission buffer and to generate a TCP segment, from the data accumulated in the transmission buffer, which is then handed to the packet transmission means 14. Further, the data segment transmission processing means 12 has a part of the congestion control and the flow control and a part of error recovery control utilizing the SACK option. The part of the congestion control and the flow control in the data segment transmission processing means 12 is to judge whether or not the transmission of the TCP segment in the congestion control and the flow control is possible. As described in the reference A, TCP manages each information of (1) SND. UNA (hereinafter referred to as "snd_una") indicating the sequence number of data which is one byte behind the accumulation confirmed data, (2) SND. NXT (hereinafter referred to as "snd_nxt") indicating the sequence number of head data to be transmitted next. and (3) SND. WND (hereinafter referred to as "snd_wnd") indicating the size of the reception window on the counter side notified in the TCP header window field by the counter side. Further, TCP manages information of congestion window as a transmission window for congestion control (hereinafter referred to as "snd_cwnd"), although this is not described in the reference A. The data segment transmission processing means 12, only when the total size of transmitted data, for which successful delivery has not been confirmed, is smaller than both the counter side reception window snd_wnd and the congestion window snd_cwnd, generates and transmits a data segment from succeeding data.

The part of the error recovery control utilizing the SACK option in the data segment transmission processing means 12 refers to: judgment on whether or not data segment transmission during error recovery processing is possible; the selection of a data segment to be retransmitted; and the management of an estimated value (hereinafter referred to as "pipe") of data during transfer which stays in the network during the error recovery processing. According to the reference E, during the error recovery processing, the data segment transmission processing means 12, only when the stay data estimated value pipe is smaller than the congestion window snd_cwnd, transmits data by a quantity, corresponding to the difference between the pipe value and the snd_cwnd value, as the maximum size. In the transmission of data, among data, for which the accumulation has not been confirmed and delivery confirmation has not been notified by the SACK option, data, which have not been retransmitted, are selected and retransmitted in the order of sequence number (i.e., from small sequence number). when data to be retransmitted is absent, the succeeding data, which has not been transmitted, is transmitted. In any case, after the data segment transmission, the size of the transmitted data segment is added to the stay data estimated value pipe.

Further, in the reference E, the sender TCP manages, through a list called a score board, data segment delivery information notified by the SACK option from the receiver TCP. One example of packaging of the score board is shown in Fig. 2. The score board has a list structure such that list elements, wherein the sequence numbers of the leading data and tail data in the data block, for which successful delivery could have been confirmed (respectively "start and "end" in Fig. 2), are stored, are arranged in the order of the sequence number of the data blocks stored therein. Each of the list elements further stores the sequence number of the final data in already retransmitted data among data blocks ranging from data blocks in a list element located one element before that list element to data blocks in its own list element ("retran" in Fig. 2). Data to be retransmitted next is learned by this construction.

The data segment reception processing means 23 functions to receive data segments, which have been handed from the packet reception means 25 and transmitted from the data segment transmission processing means 12, and to store the received data in a proper order in the reception buffer. Further, the data segment reception processing means 23 notifies the ACK transmission processing means 22 of the information of the received data segments.

The ACK transmission processing means 22 generates an ACK message from the information of the data segment notified by -the data segment reception processing means 23 and hands the ACK message to the packet transmission means 24. When omission is found in data contained in the data segments received up to this point and several data blocks are present, the ACK transmission processing means 22 performs the notification of the data blocks by the SACK option according to the method described in the reference D.

The ACK reception processing means 13 is means for processing an ACK message which has been handed from the packet reception means 15 and transmitted by the ACK transmission means 22. The ACK reception processing means 13 comprises SACK option processing means 131 and ACK processing means 132. The SACK option processing means 131, when an SACK option is attached to the ACK message received from the packet reception means 15, performs processing in such a manner that the score board reflects the content. When the status is not in error control processing, that is, when the status is in slow start or congestion avoidance, ACK processing means 132 monitors duplicate ACK, while, when a specified number of times of duplicate ACK (the specified number of times will be hereinafter referred to also as "rxmtthresh") have been successively received, as described above, Fret processing is carried out. In this case, as initialization processing for processing during the error control processing, the ACK processing means 132 stores the segment number (hereinafter referred to as "snd_max") of the final data in the transmitted data at that time (the stored segment number will be hereinafter represented by "p_max_seq"), sets the estimated stay data size to the pipe, stores the half value of the congestion window at that time (the stored value will be hereinafter represented by "ssthresh"), and halves the congestion window snd_cwnd.

During the error control processing, the ACK processing means 132 (1) reduces the pipe value by one MSS size for duplicate ACK, and (2), upon the update of the accumulation confirmation, deletes the accumulation confirmed data from the transmission buffer, performs processing so as for the score board to reflect the content (deletion of a list element storing the information of the accumulation confirmed data from the score board), and updates snd_una to the accumulation confirmed value notified by the ACK message (hereinafter referred to as "ti_ack"). Thereafter, in both the above cases (1) and (2), a request for transmission is made to the data segment transmission processing means 11. Upon the confirmation of the delivery of all data segments transmitted at the time of the start of FRet, that is, when ti_ack is larger than p_max_seq, the error control processing is ended, the pipe value is initialized to zero (0), snd_cwnd is set to the value stored in ssthresh, and and_una and p_max_seq values are set to ti_ack, followed by the start of congestion avoidance.

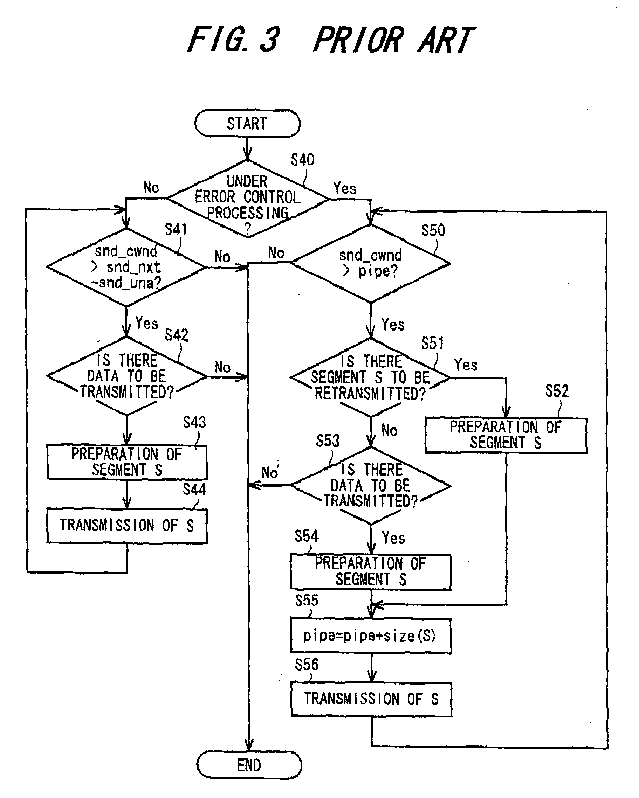

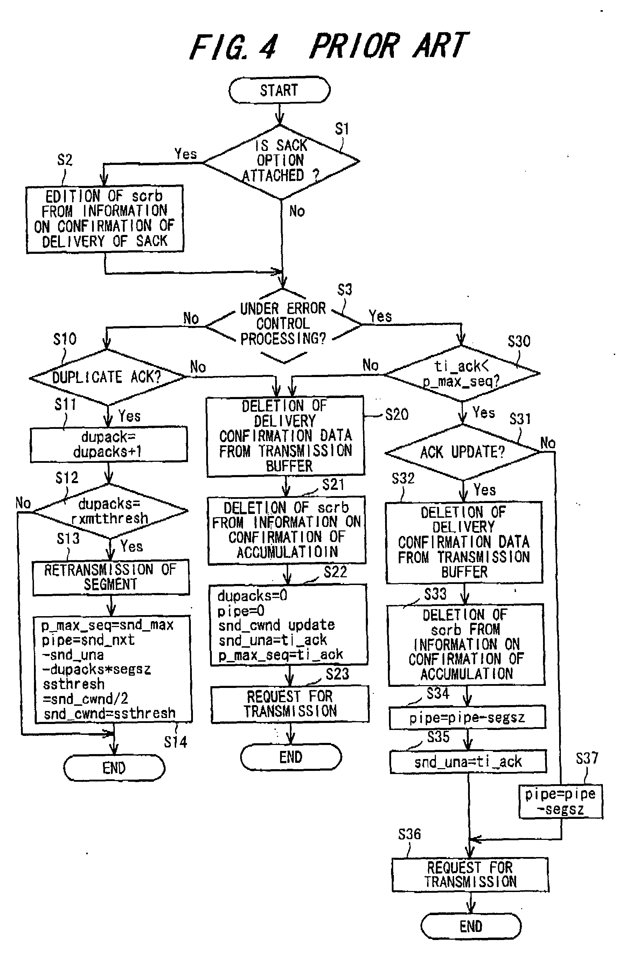

Next, the operation of the existing technique will be explained in conjunction with Figs. 3 and 4. Figs. 3 and 4 show the flow of processing at the time of data segment transmission and processing at the time of ACK message reception in the transmitter 1. However, for example, flow control using the reception window size notified by the receiver 2, the calculation of time-out value of the retransmission control timer, and the update of the congestion window are not directly related to the invention, and, thus, the description thereof will be omitted.

When the status is not in error control processing, that is, when the status is in slow start or congestion avoidance (No in step S40 in Fig. 3), the data segment transmission processing means 12 transmits data segments within the scope of the congestion control and flow control (steps S41 to S44 in Fig. 3). Thereafter, when the data segment or the ACK message transferred is lost and, at the same time, when there is no change in the order of arrival of transmitted data segments, the data segment reception processing means 23 and the ACK transmission processing means 22 receive a data segment and generate and send an ACK message for the confirmation of the delivery. In this case, since the accumulation confirmation is returned in a proper order for the transmitted data segments (No in step S1, No in step S3, and No in step S10 in Fig. 4), upon the reception of an ACK message, the ACK reception processing means 13 deletes, from the transmission buffer, data for which the delivery has been confirmed by accumulation confirmation, edits the score board (scrb) so that the score board reflects the content of the accumulation confirmation (when the score board contains a list element for which the delivery has been confirmed by the accumulation confirmation, the ACK reception processing means 13 deletes this list element, and when the retran value of the head list element is smaller than ti_ack, the retran value is set to ti_ack), updates the snd_cwnd value, and sets the snd_una and p_max_seq values to the ti_ack value for which accumulation confirmation has been made by this ACK message, followed by a request to the data segment transmission processing means 12 for transmission (steps S20 to S23 in Fig. 4).

When a data segment transmitted from the data segment transmission processing means 12 has been lost with the other transmitted data segments having been received in the order of transmission by the data segment reception processing means 23, the data segment reception processing means 23 receives data segments other than the lost data segment. Upon the receipt of data segments having sequence numbers after the sequence number of the lost data segment, the ACK transmission processing means 22, which has been informed of the reception of the data segment, generates duplicate ACK, containing a SACK option reporting the receipt of the data segment, and transmits the duplicate ACK to the transmitter 1. In the ACK reception processing means 13, upon the reception of the SACK option-containing duplicate ACK, the SACK option processing means 131 performs processing in such a manner that the score board reflects the information notified by the SACK option (for example, the addition of a data segment notified of the delivery to the score board) (Yes in step S1 and step S2 in Fig. 4), and hands the duplicate ACK to the ACK processing means 132. Upon the receipt of the duplicate ACK, the ACK processing means 132 counts up the number of times of the reception of duplicate ACK dupacks (No in step s3, Yes in step S10, step S11 is executed, and No in step S12 in Fig. 4). When the number of times of the reception of duplicate ACK has reached the specified number of times rxmtthresh (Yes in step S12 in Fig. 4), the ACK processing means 132 retransmits one data segment located after the data segment for which the accumulation confirmation has been made by the duplicate ACK, followed by initialization of various variables for error control processing (step S13 and step S14 in Fig. 4). In the initialization of variables for error control processing, snd_max is stored in p_max_seq, the estimated stay data size snd_nxt-snd_una-dupacks*segsz is set in pipe, and the half value (snd_cwnd/2) of the congestion window size used up to this point is set in ssthresh and the congestion window size snd_cwnd. Here segsz refers to MSS.

Thereafter, the data segment transmission processing means 12 and the ACK reception processing means 13 perform error control processing until the accumulation of the data segment stored in p_max_seq is confirmed.

In the error control processing, regarding the received ACK message, when the accumulation confirmation of the ACK message does not update the data segments for which the accumulation confirmation has been made up to this stage (Yes in each of steps S3 and S30 and No in step S31 in Fig. 4), the ACK processing means 132 reduces the pipe value by segsz, and makes a request to the data segment transmission processing means 12 for transmission (step S37 and step S36 in Fig. 4). On the other hand, when the ACK processing means 132 has received an ACK message for the update of the accumulation confirmation which has been made up to this stage (Yes in each of steps S3, S30, and S31 in Fig. 4), the ACK processing means 132 deletes the accumulation confirmed data segments from the transmission buffer, performs processing so as for the score board to reflect the content of the accumulation confirmation, reduces the pipe value by segsz, sets the snd_una value to ti_ack, and makes a request to the data segment transmission processing means 12 for transmission (steps S32 to S36 in Fig. 4).

When the congestion window pipe value is smaller than the snd_cwnd value, the data segment transmission processing means 12, to which the request for transmission has been made during error control, generates and transmits a data segment (Yes in steps S40 and S50 in Fig. 3). In this case. the data segment transmission processing means 12 first searches the score board for whether or not there is data to be retransmitted. When data to be retransmitted is present, the data segment thereof is generated (Yes in step S51 and step S52 in Fig. 3). On the other hand, when the data to be retransmitted is absent (No in step S51 in Fig. 3) and, in addition, there is data to be transmitted (Yes in step S53 in Fig. 3), a succeeding new data segment is prepared (step S54 in Fig. 3). In this case, the data segment to be retransmitted refers to a data segment for which the delivery has not been confirmed in the score board and which has never been retransmitted. Such data segments are selected in the order of sequence numbers (i.e. a data segment having a smaller sequence number is selected in an earlier stage). Specifically, the leading list element in the score board is searched for a list element of start > retran + 1. When this list element is present, data segments as the retransfer object range from retran + 1 to start - 1 of the list element.

In both the case of retransmission data segments and the case of novel data segments, the pipe value is increased by the size of the data segment, followed by the transmission of the data segment (step s55 and step S56 in Fig. 3).

On the other hand, when the accumulation of the data segment having a sequence number stored in p_max_seq has been confirmed, the data segment transmission processing means 12 and the ACK reception processing means 13 terminate the error control. Upon the reception of the above ACK message (Yes in step S3 and No in step S30 in Fig. 4), the ACK processing means 132, as with the usual ACK processing, deletes the delivery confirmed segment from the transmission buffer, performs processing so as for the score board to reflect the content of the accumulation confirmation, updates various variables for the error control, and makes a request to the data segment transmission processing means 12 for transmission (steps S20 to S23 in Fig. 4).

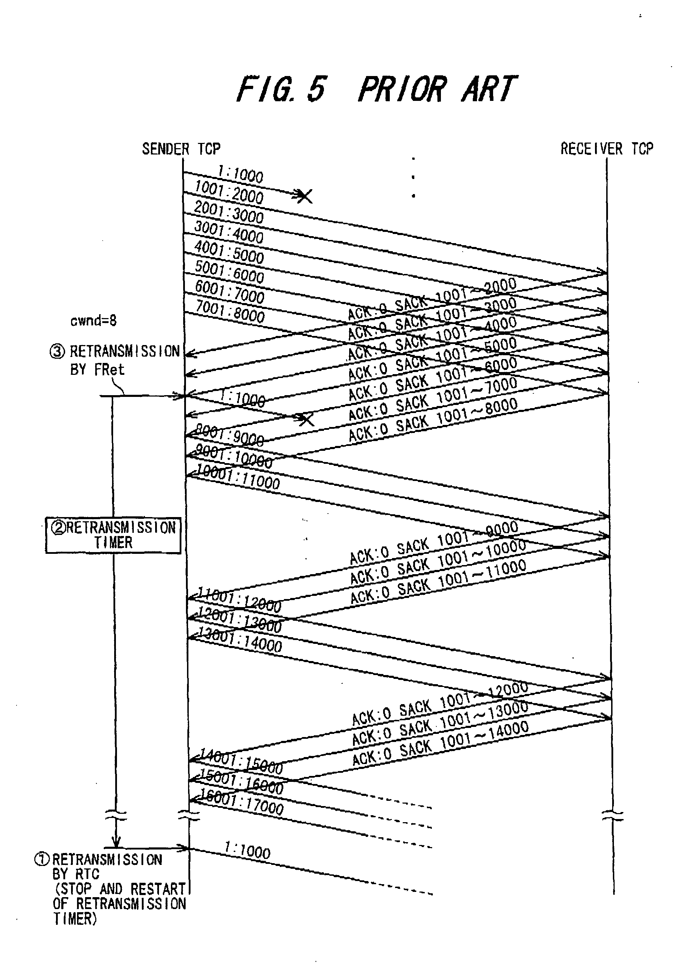

The first problem of the prior art techniques is that the loss of a retransmitted data segment results in deteriorated throughput performance. The reason for this is as follows. In the prior art techniques, no measure is taken to cope with the loss of a retransmitted data segment, and only one means for detection of the loss of the retransmitted data segment is to utilize the time-out of a retransmission timer. Fig. 5 shows one example of a sequence diagram of data segments and ACK messages which occur due to the first problem. This drawing shows the sequence of data segments and ACK messages which are transmitted from the sender TCP to the receiver TCP and vice versa per connection. The sequence number of the data segment begins with 1. However, it should be noted that this represents neither the absolute value of the sequence number nor the relative value from the time of the establishment of the connection and, for the simplification of the explanation, the sequence number of the first data segment in the sequence adopted here is presumed to be 1 (this is true of the sequence diagrams described below). Fig. 5 shows a sequence in the case where, when the congestion window is 8*MSS, one data segment (1 : 1000) has been lost, and a data segment containing the same data, which is retransmitted in FRet, has been again lost. In this case, due to the loss of the retransmitted data segment 1 : 1000, the loss of data segments cannot be detected until the time-out of a retransmission timer which has been set at the time of the transmission of the data segment.

In the sequence diagrams shown in Fig. 5 and other drawings, "x : y", wherein x and y are each an integer, represents TCP data segments containing data segments x to y. "ACK : n", wherein n is an integer, represents an ACK message containing the accumulation confirmation of data segment n. "SACK : x to y" represents a message containing the notification of reception of data segments x to y by the SACK option. The mark "×" represents the loss of a packet.

The second problem of the prior art techniques is that, in the SACK option, when the order of arrival of data segments transmitted during the error control processing has been changed, or when the size of the transmission window is not satisfactorily large, the throughput performance is often deteriorated. The reason for this is that, although the sender TCP can learn the omission of received data from the information of received segments notified by the SACK option from the receiver TCP, the retransmission of the lost data segment from the sender TCP immediately after the sender TCP has learned the omission of the data segment, results in unnecessary retransmission when the order of arrival of data segments has been changed. Even when a lost data segment is designed to be retransmitted after the sender TCP has received, by a specified number of times, ACK reporting the omission of the same data segment, the loss of the data segment can be detected only through the time-out of the retransmission timer in the case where the size of the transmission window is not large enough to permit the transmission of the specified number of data segments.

The third problem of the prior art techniques is that, when an ACK message from the receiver TCP has been lost during the error control processing, the throughput performance is often deteriorated. The reason for this is that, in the prior art techniques, since the sender TCP during the error control processing releases the closed transmission window in response to the reception of an ACK message from the receiver TCP, the loss of an ACK message causes the closed transmission window to remain closed by the extent corresponding to the lost ACK message.

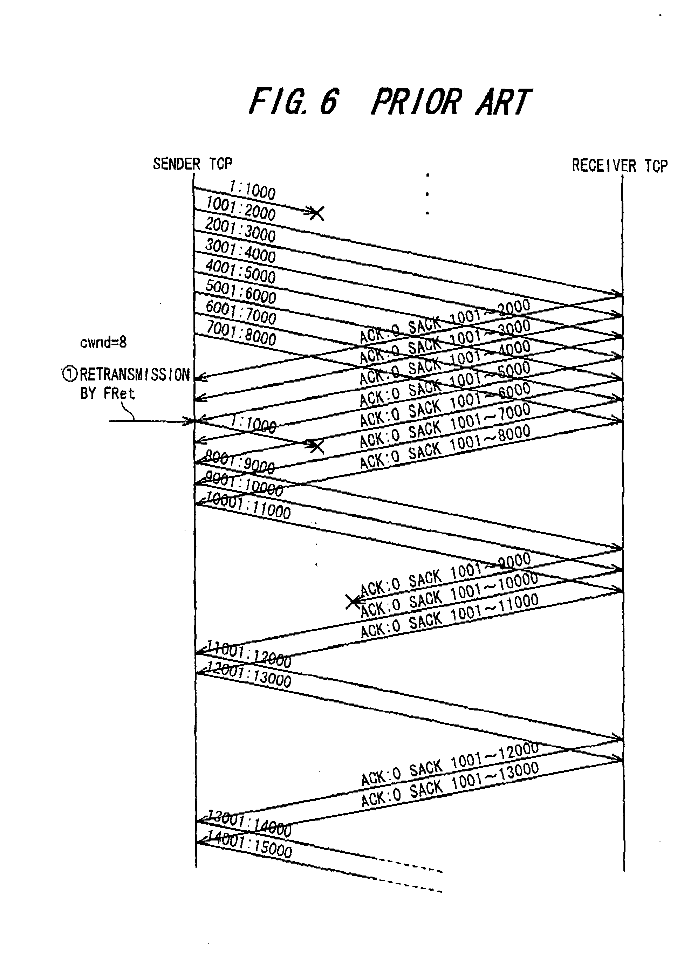

Fig. 6 shows one example of a sequence diagram of data segments and ACK messages which occur due to the third problem. Fig. 6 shows a sequence in the case where, when the congestion window is 8*MSS, one data segment (1 : 1000) has been lost. and a data segment containing the same data, which is retransmitted in FRet, has been again lost and, in addition, thereafter, one of the ACK messages transmitted by the receiver TCP has been lost. In this case, until the confirmation of delivery of the data segment 1 : 1000, the half value of the original congestion window size 8*MSS, that is, 4*MSS, should be used as the transmission window. However, due to the loss of one ACK message, after the loss of the ACK message, only substantially 3*MSS can be used as the transmission window.

With a view to solving the first problem, Kondo, Atsumi, and Yoshida, "Taimuauto wo kaihisuru SACK-TCP saiso seigyo hoshiki (SACK-TCP retransmission control system for avoidance of time-out)," Technical Report of The Institute of Electronics, Information and Communication Engineers, CQ98-63. pp. 21 - 26, (December in 1998) has proposed a method wherein the sequence number of a data segment transmitted just after the retransmission data segment is stored and, when the delivery of data segments having sequence numbers after the stored sequence number has been notified by the SACK option, the retransmitted data segment is regarded as having been lost and, in this case, the lost data segment is immediately retransmitted. This method, however, suffers from the-second problem.

### SUMMARY OF THE INVENTION

Accordingly, it is an object of the invention to solve the above problems of the prior art and to provide a data communication system, a data communication method, and a recording medium with a data communication program recorded thereon, which can provide good throughput performance within the scope of the restriction of general principle of congestion control recommended, for example, in the reference B.

According to the first feature of the invention, a data communication system comprises a data transmitter, a data receiver, and a network for connecting the data transmitter to the data receiver, wherein said data transmitter transmits data packets to the data receiver, said data receiver transmits an ACK packet for informing the data transmitter of the confirmation of the delivery of the received data packet, and said data transmitter detects the loss of the transmitted data packet based on the content of the ACK packet and retransmits the data packet, which has been detected to be lost, whereby error control of data packets is carried out,
said data transmitter comprising: a counter for counting the number of round trips of data packets transmitted; and means for storing, for each transmitted data packet, the relationship between the data packet and the counter value at the time of the transmission of the data packet and, when the stored counter value is two or more smaller than the current counter value, judges that the data packet corresponding to the stored counter value has been lost, followed by the retransmission of the data packet which has been judged to be lost.

In the data communication system according to the first feature of the invention, preferably,
the data transmitter further comprises means for incorporating, as round trip notification information, the current counter value into the data packet transmitted,
the data receiver further comprises means for incorporating, as round trip response information, the counter value, contained as the round trip notification information in the received data packet, into an ACK packet for the received data packet, and
the data transmitter further comprises means for increasing the counter value by one in the case where the value contained as the round trip response information in the received ACK packet is equal to said counter value.

According the second feature of the invention, a data communication system comprises a data transmitter, a data receiver, and a network for connecting the data transmitter to the data receiver, wherein said data transmitter transmits data packets to the data receiver, said data receiver transmits an ACK packet for informing the data transmitter of the confirmation of the delivery of the received data packet, and said data transmitter detects the loss of the transmitted data packet based on the content of the ACK packet and retransmits the data packet, which has been detected to be lost, whereby error control of data packets is carried out,
said data transmitter comprising:
   a counter for counting the number of round trips of data packets transmitted;
   first and second tables for storing predetermined data;
   means for storing, for each transmitted data packet, the relationship between the data packet and the time at the point of the transmission of the data packet in the first table;
   means for storing, in the second table, for each counter value in the counter, the relationship between the counter value and the time at the point of the transmission of the first data packet after the counter has indicated said counter value; and
   means which, when the value of the time stored in the first table is smaller than the value of the time corresponding to a counter value which is two smaller than the current counter value stored in the second table, judges that the data packet corresponding to the time stored in the first table has been lost, followed by the retransmission of the data packet which has been judged to be lost.

In the data communication system according to the second feature of the invention, preferably,
the data transmitter further comprises means for incorporating, as time notification information, the current time into the data packet transmitted,
the data receiver further comprises means for incorporating, as time response information, the time, contained as the time notification information in the received data packet, into an ACK packet for the received data packet, and
the data transmitter further comprises means for increasing the counter value by one in the case where the value of the time contained as the time response information in the received ACK packet is equal to or larger than the value of the current time stored, in the second table, in the relationship with the current counter value.

According to the third feature of the invention, a data communication system comprises a data transmitter, a data receiver, and a network for connecting the data transmitter to the data receiver, wherein said data transmitter transmits data packets to the data receiver, said data receiver transmits an ACK packet for informing the data transmitter of the confirmation of the delivery of the received data packet, and said data transmitter detects the loss of the transmitted data packet based on the content of the ACK packet and retransmits the data packet, which has been detected to be lost, whereby error control of data packets is carried out and, wherein, during error control in its period between the detection of the loss of a data packet and the confirmation of the delivery of the data packet by the data transmitter, transmission flow control is carried out by a transmission window,
said data transmitter functioning to release, from the transmission window, a closed window to an extent corresponding to the total size of data, for which delivery confirmation has been newly made by ACK packets received from the data receiver during the error control, thereby rendering the released window transmittable.

According to the fourth feature of the invention, a data communication method comprises the steps of: providing a data communication system comprising a data transmitter, a data receiver, and a network for connecting the data transmitter to the data receiver; transmitting data packets by the data transmitter to the data receiver; transmitting an ACK packet for informing, by the data receiver, the data transmitter of the confirmation of the delivery of the received data packet; detecting the loss of the transmitted data packet, by the data transmitter, based on the content of the ACK packet; and retransmitting the data packet, which has been detected to be lost, by the data transmitter, thereby performing error control of data packets, wherein
the data transmitter is provided with a counter for counting the number of round trips of data packets transmitted, and
for each transmitted data packet, the relationship between the data packet and the counter value at the point of the transmission of the data packet is stored, and, when the stored counter value is two or more smaller than the current counter value at that time, the data packet corresponding to the stored counter value is regarded as having been lost, followed by the retransmission of the lost data packet.

In the data communication method according to the fourth feature of the invention, preferably,
the data transmitter incorporates, as round trip notification information, the current counter value into the data packet transmitted,
the data receiver incorporates, as round trip response information, the counter value, contained as the round trip notification information in the received data packet, into an ACK packet for the received data packet, and
the data transmitter increases the counter value by one in the case where the value contained as the round trip response information in the received ACK packet is equal to said counter value.

According to the fifth feature of the invention, a data communication method comprises the steps of: providing a data communication system comprising a data transmitter, a data receiver, and a network for connecting the data transmitter to the data receiver; transmitting data packets by the data transmitter to the data receiver; transmitting, by the data receiver, an ACK packet for informing the data transmitter of the confirmation of the delivery of the received data packet; detecting the loss of the transmitted data packet, by the data transmitter, based on the content of the ACK packet; and retransmitting the data packet, which has been detected to be lost, by the data transmitter, thereby performing error control of data packets, wherein
the data transmitter is provided with a counter for counting the number of round trips of data packets transmitted, and first and second tables for storing predetermined data, for each transmitted data packet, the relationship between the data packet and the time at the point of the transmission of the data packet is stored in the first table,
for each counter value in the counter, the relationship between the counter value and the time at the point of the transmission of the first data packet after the counter has indicated said counter value is stored in the second table, and
when the value of the time stored in the first table is smaller than the value of the time corresponding to a counter value which is two smaller than the current counter value stored in the second table, the data packet corresponding to the time stored in the first table is regarded as having been lost, followed by the retransmission of the data packet which has been judged to be lost.

In the data communication method-according to the fifth feature of the invention, preferably,
the data transmitter incorporates, as time notification information, the time at that point into the data packet transmitted,
the data receiver incorporates, as time response information, the time, contained as the time notification information in the received data packet, into an ACK packet for the received data packet, and
the data transmitter increases the counter value by one in the case where the value of the time contained as the time response information in the received ACK packet is equal to or larger than the value of the current time stored, in the second table, in the relationship with the current counter value.

According to a sixth feature of the invention, a data communication method comprises the steps of: providing a data communication system comprising a data transmitter, a data receiver, and a network for connecting the data transmitter to the data receiver; transmitting data packets by the data transmitter to the data receiver; transmitting, by the data receiver, an ACK packet for informing the data transmitter of the confirmation of the delivery of the received data packet; detecting the loss of the transmitted data packet, by the data transmitter, based on the content of the ACK packet; retransmitting the data packet, which has been detected to be lost, by the data transmitter, thereby performing error control of data packets; and performing transmission flow control by a transmission window, during error control in its period between the detection of the loss of a data packet and the confirmation of the delivery of the data packet by the data transmitter, wherein
the data transmitter functions to release, from the transmission window, a closed window to an extent corresponding to the total size of data, for which delivery confirmation has been newly made by ACK packets received from the data receiver during the error control, and consequently renders the released window transmittable.

According to a seventh feature of the invention, a computer readable recording medium comprises, recorded thereon, a program which is used in executing any one of the above data communication methods by means of a computer.

### BRIEF DESCRIPTION OF THE DRAWINGS

The invention will be explained in more detail in conjunction with the appended drawings, wherein:
Fig. 1 is a block diagram showing the construction of a conventional technique;
Fig. 2 is a diagram showing the data structure of the conventional technique shown in Fig. 1;
Fig. 3 is a processing flow diagram showing the transmission operation of the conventional technique shown in Fig. 1;
Fig. 4 is a processing flow diagram showing the reception operation of the conventional technique shown in Fig. 1;
Fig. 5 is a sequence diagram showing an example of the operation of the conventional technique shown in Fig. 1 ;
Fig. 6 is a sequence diagram showing another example of the operation of the conventional technique shown in Fig. 1;
Fig. 7 is a block diagram showing the construction of the first preferred embodiment of the invention;
Fig. 8 is a diagram showing the data structure of the first preferred embodiment of the invention;
Fig. 9 is a diagram showing an embodiment of the construction of an RTC option field;
Fig. 10 is a processing flow diagram showing the transmission operation of the first preferred embodiment of the invention;
Fig. 11 is a processing flow diagram showing the reception operation of the first preferred embodiment of the invention;
Fig. 12 is a sequence diagram showing an embodiment of the operation of the first preferred embodiment of the invention;
Fig. 13 is a sequence diagram showing another embodiment of the operation of the first preferred embodiment of the invention;
Fig. 14 is a block diagram showing the construction of the second preferred embodiment of the invention;
Fig. 15 is a diagram showing the data structure of the second preferred embodiment of the invention;
Fig. 16 is a diagram showing the construction of a time stamp option field;
Fig. 17 is a processing flow diagram showing the transmission operation of the second preferred embodiment of the invention; and
Fig. 18 is a processing flow diagram showing the reception operation of the second preferred embodiment of the invention.

### DESCRIPTION OF THE PREFERRED EMBODIMENTS

Preferred embodiments of the invention will be explained in detail in conjunction with the accompanying drawings. Fig. 1 shows a data communication system, a data communication method, and a recording medium with a data communication program recording thereon according to the first preferred embodiment of the invention.

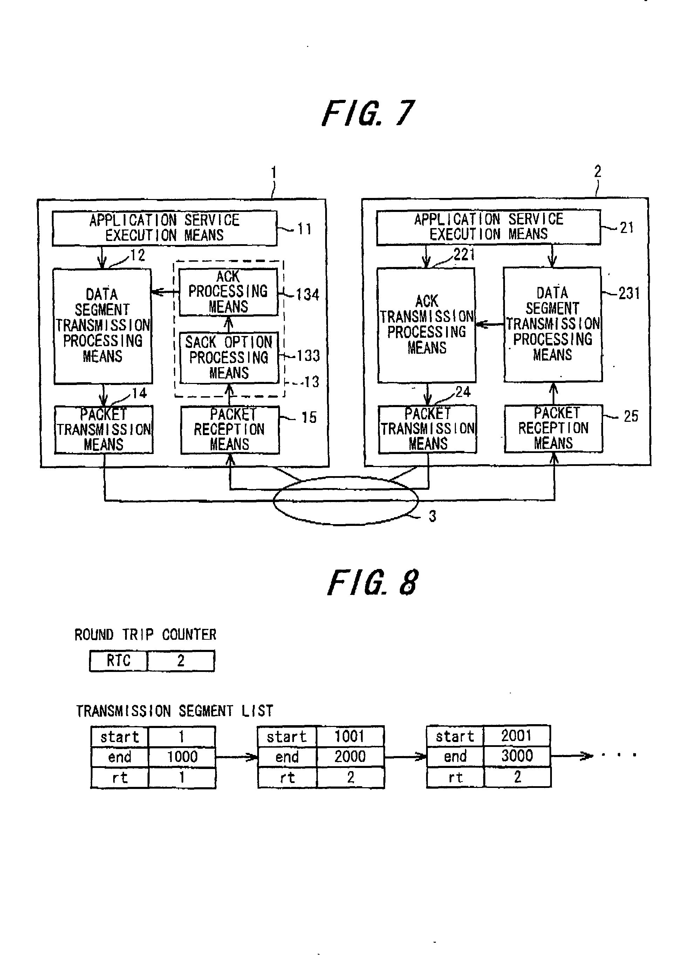

As shown in Fig. 7, the first preferred embodiment of the invention comprises a transmitter 1, a receiver 2, and a network 3. The transmitter 1 is connected to the receiver 2 through the network 3. The transmitter 1 comprises application service execution means 11, data segment transmission processing means 121. ACK reception processing means 13, packet transmission means 14, and packet reception means 15. The receiver 2 comprises application service execution means 21, ACK transmission processing means 221, data segment reception processing means 231, packet transmission means 24, and packet reception means 25. The application service execution means 11 and the application service execution means 21 are the same as those described above in connection with the prior art techniques and provide in pair services to users. The packet transmission means 14, 24 and the packet reception means 15, 25 are the same as those described above in connection with the prior art techniques and each provide packet transmission/reception services to higher rank units. The network 3 is also the same as described above in connection with the prior art techniques and is an IP network.

The data segment transmission processing means 121, the ACK reception means 13. the ACK transmission means 221, and the data segment reception processing means 231 are also the same as described above in connection with the prior art techniques and perform protocol processing for handing data, received from the application service execution means 11, to the application execution means 21 without fail.

The data segment transmission processing means 121 and the ACK reception processing means 13 have a round trip counter (RTC) for storing the number of round trips of transmitted data segments (a "round trip counter" shown in Fig. 8) and have a transmission segment list (hereinafter referred to also as "SSL") instead of the score board explained above in conjunction with the prior art techniques. The transmission segment list comprises a list of elements for storing the information of data segments which have been transmitted by the data segment transmission processing means 121 up to this point. Each list element stores the first and final data sequence numbers of the transmitted data segment, for which the accumulation confirmation or the delivery confirmation by the SACK option has not been made yet, and the RTC value at the point when the data segment has been finally transmitted ("start", "end," and "rt" in "transmission segment list" in Fig. 8). These list elements are arranged in the order of final transmission. For example, Fig. 8 shows a transmission segment list wherein data segment 1 : 1000 was transmitted when RTC was 1: and data segment 1001 : 2000 and data segment 2001 : 3000 were transmitted when RTC was 2 and wherein, for these three data segments, the accumulation confirmation or the delivery confirmation by the SACK option has not been received yet. Here when the data segment 1 : 1000 has been retransmitted at RTC of 3, for example, by FRet, in the transmission segment list, the list elements are arranged in the order of data segments 1001 : 2000 (leading), 2001 : 3000, and 1 : 1000 (tail). In this case, the contents of the data segments 1001 : 2000 and 2001 : 3000 are the same as those of these list elements shown in Fig. 8, except that the list element of the data segment 1 : 1000 has an rt value of 3.

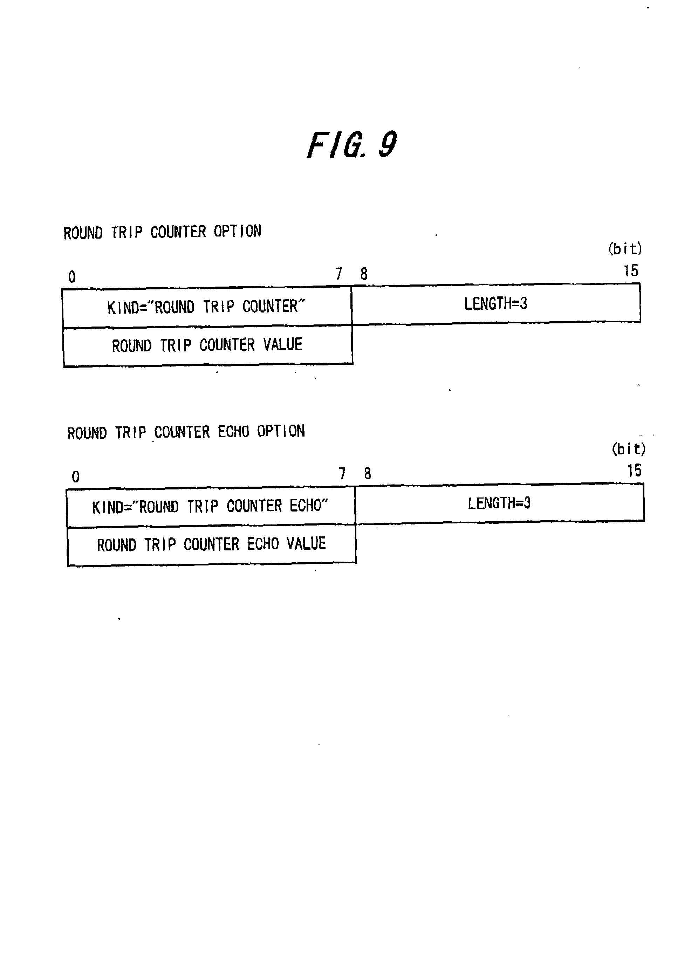

A round trip counter (RTC) option field and a round trip counter echo (RTCE; round trip response) option field shown in Fig. 9 for the notification of the round trip counter value are added to a message which is transmitted from the transmitter 1 to the receiver 2 or transmitted from the receiver 2 to the transmitter 1. Specifically, in transmitting a data segment, the data segment transmission processing means 121 adds an RTC option field to the prepared data segment, and stores the RTC value held at that time in the round trip counter value field (hereinafter referred to also as "ti_rtc field") in the RTC option field, followed by the transmission of the data segment. In the embodiment shown in Fig. 9, the RTC option field comprises an 8-bit kind field indicating the type of data ("RTC"), an 8-bit length field representing the data length 3 using 8 bits as the unit, and an 8-bit RTC value field indicating the RTC value. The RTCE option field comprises an 8-bit kind field indicating the type of data ("RTCE"), an 8-bit length field indicating data length 3, and an 8-bit RTCE value field indicating the RTCE value. In preparing an ACK message for the received data segment notified by the data segment reception processing means 231, the ACK transmission processing means 221 adds the RTCE option field to the prepared ACK message, and stores the value of the round trip counter value field of the data segment RTC option in the round trip counter echo value field (hereinafter referred to also as "ti_rtce field"), followed by the transmission of the ACK message.

Basically, the data segment transmission processing means 121 accumulates data, received from the application service execution means 11, in the transmission buffer, generates a TCP segment from data accumulated in the transmission buffer, and hands the TCP segment to the packet transmission means 14. Further, the data segment transmission processing means 121 has a part of the congestion control and flow control in the first preferred embodiment of the invention and a part of the error recovery control utilizing SACK option.

The part of the congestion control and flow control in the first preferred embodiment of the invention provided in the data segment transmission processing means 121 is to judge whether or not the transmission of the TCP segment in the congestion control and the flow control is possible. As with the above description in connection with the prior art techniques, in the first preferred embodiment of the invention, the data segment transmission processing means 121 manages each information of (1) snd_una indicating the sequence number of data which is one byte behind the accumulation confirmed data, (2) snd_nxt indicating the sequence number of leading data to be transmitted next, and (3) snd_wnd indicating the size of the reception window on the counter side notified in the TCP header window field by the counter side, and the information of congestion window snd_cwnd which is a transmission window for congestion control- The data segment transmission processing means 121, only when the total size of transmitted data, for which delivery has not been confirmed, is smaller than both the counter side reception window snd_wnd and the congestion window snd_cwnd, generates and transmits a data segment from succeeding data. In this case, the data segment transmission processing means 121 adds an RTC option to the prepared data segment, stores the RTC value held at that time in the round trip counter value field, prepares a list element regarding the prepared data segment (wherein the start and end values are respectively the first and final data sequence numbers of the data segment and the rt value is the RTC value stored in the round trip counter value field), and adds the list element to the tail of the transmission segment list.

The part of the error recovery control utilizing the SACK option provided in the data segment transmission processing means 121 refers to: judgment on whether or not data segment transmission during error recovery processing is possible; the selection of a data segment to be retransmitted; and the management of an estimated value (hereinafter referred to as "pipe") of data during transfer which stays in the network during the error recovery processing. As with the prior art techniques, during error recovery processing, the data segment transmission processing means 121, only when the stay data estimated value pipe is -smaller than the congestion window snd_cwnd, transmits data by the difference as the maximum size. In the transmission of data, among data, for which the accumulation has not been confirmed and delivery confirmation has not been notified by the SACK option, data of the list elements having an rt value equal to or smaller than RTC-2 are selected from the leading part of the transmission segment list one by one and are retransmitted. When data to be retransmitted is absent, untransmitted succeeding data is transmitted. In any event, after the transmission of the data segment, the size of the transmitted data segment is added to the stay data estimated value pipe.

The data segment delivery information notified by the SACK option managed by a list called a transmission segment list rather than the score board explained above in connection with the conventional techniques. The structure of the transmission seqment list is as described above.

As with the data segment reception processing means 23 described above in connection with the conventional techniques, the data segment reception processing means 231 receives data segments, which have been transmitted from the data segment transmission processing means 121 and received from the packet reception means 25, and stores the received data in a proper order in the reception buffer. Further, the data segment reception processing means 231 notifies the ACK transmission processing means 221 of the information of the received data segment, and, when the received data segment has an RTC option attached thereto, hands this information as well to the ACK transmission processing means 221.

The ACK transmission processing means 221 prepares an ACK message based on information of the data segment notified by the data segment reception processing means 231 and hands the ACK message to the packet transmission means 24. When omission is found in data contained in the data segments received up to this point and several data blocks are present, the ACK transmission processing means 221 performs the notification of the data blocks by the SACK option in the same manner as described above in connection with the conventional techniques. When the information of the data segment received from the data segment reception processing means 231 has an RTC option attached thereto, an RTCE option is added to the prepared ACK message, and the value of the round trip counter value field of the notified RTC option is stored in the round trip counter echo value field.

The ACK reception processing means 13 is means for processing the ACK message, which has been transmitted from the ACK transmission means 221 and received from the packet reception means 15, and comprises SACK option processing means 133 and ACK processing means 134. When the ACK message received from the packet reception means 15 has an SACK option attached thereto, the SACK option processing means 133 performs processing in such a manner that the transmission segment list reflects the content. Specifically, a list element containing data segment for which delivery confirmation has been made by the SACK option is deleted from the transmission segment list. Further, when the status is under error control processing, the pipe value is reduced by an extent corresponding to the size of the data contained in the deleted list element.

When the received ACK message contains an RTCE option field and, at the same time, when the value ti_rtce of the round trip counter echo value field of the RTCE option field is equal to the RTC value at that point, the ACK processing means 134 first counts up the RTC value by one. When the status is not in error control processing, that is, when the status is in slow start or congestion avoidance, the ACK processing means 134 monitors duplicate ACK, and, when a specified number of times of duplicate ACK (rxmtthresh) have been successively received, performs FRet processing. In this case, as with the conventional techniques, data just after data, for which the accumulation has been confirmed by the duplicate ACK, is retransmitted. In this case, unlike the conventional techniques, an RTC option is added to the data segment transmitted, the list element having information concerning the data segment of data transmitted is deleted from the transmission segment list, and the list element having the information of the data segment of data transmitted (list element wherein "start" and "end" respectively have the sequence number values of the first and final data contained in the data segment and "rt" has an RTC value at that point) is added to the tail of the transmission segment list. As initialization processing for processing during the error control processing, the ACK processing means 134 stores the segment number snd_max of the final data in the transmitted data at that point in p_max_seq, sets the estimated stay data size in the pipe, stores the half value of the congestion window at that point in ssthresh and the congestion window snd_cwnd.

During the error control processing, the ACK processing means 134 (1) reduces the pipe value by one MSS size for duplicate ACK, and (2), upon the update of the accumulation confirmation, deletes the accumulation confirmed data from the transmission buffer, performs processing so as for the transmission segment list to reflect the content (deletion of a list element storing the information of the accumulation confirmed data from the transmission segment list), resets a value, obtained by subtracting the total size of data contained in the deleted list from the original pipe value, as the pipe value, and updates snd_una to the accumulation confirmed value ti_ack notified by the ACK message. Thereafter, in both the above cases (1) and (2), a request for transmission is made to the data segment transmission processing means 11. Upon the confirmation of the delivery of all data segments transmitted at the time of the start of FRet, that is, when ti_ack is larger than p_max_seq, the error control processing is ended, the pipe value is initialized to zero (0), snd_cwnd is set to the value stored in ssthresh, and snd_una and p_max_seq values are set to ti_ack value, followed by the start of congestion avoidance.

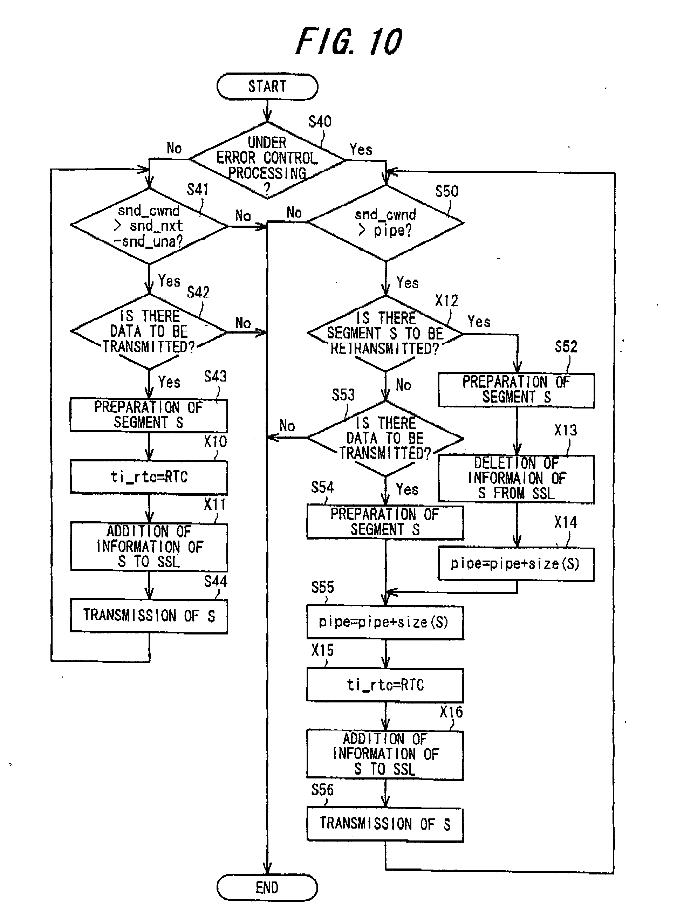

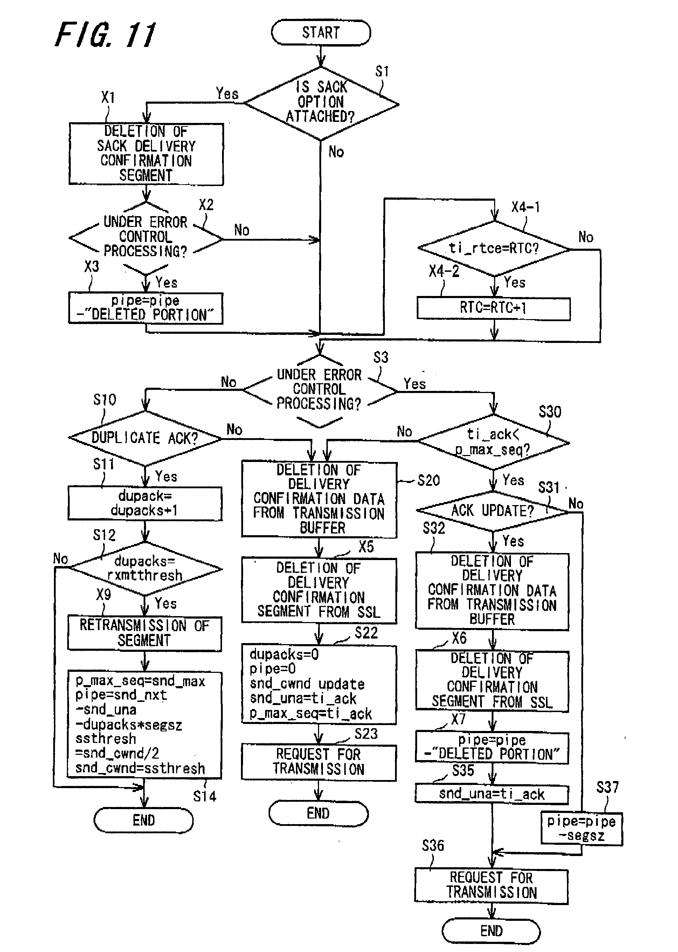

Next, the operation of the first preferred embodiment according to the invention will be explained in conjunction with Figs. 10 and 11. Figs. 10 and 11 show the flow of processing at the time of data segment transmission and processing at the time of ACK message reception in the transmitter 1. However, for example, flow control using the reception window size notified by the receiver 2, the calculation of time-out value of the retransmission control timer, and the update of the congestion window are not directly related to the invention, and, thus, the description thereof will be omitted.

When the status is not in error control processing, that is, when the status is in slow start or congestion avoidance (No in step S40 in Fig. 10), the data segment transmission processing means 121 transmits data segments S within the scope of the congestion control and flow control. In this case, an RTC option is added to the data segment, information concerning the data segment is stored in the transmission segment list (steps S41 to S43 and X10 and X11 in the same drawing), and the data segment is transmitted (step S44 in the same drawing). Thereafter, when the data segment or the ACK message transferred is not lost and, in addition, there is no change in the order of arrival of data segments or ACK messages, the data segment reception processing means 231 and the ACK transmission processing means 221 receive a data segment and generate and send an ACK message for the confirmation of the delivery. In this case, the ACK transmission processing means 221 adds an RTCE option field to each ACK message, and the value of the round trip counter value field of the RTC option filed added to the object data segment for the transmission of the ACK message is stored in the round trip counter echo value field of the RTCE option field. In this case, since no SACK option is added, upon the reception of the ACK message, in the ACK reception processing means 13, the SACK option processing means 133 does not perform processing (No in step S1 in Fig, 11) and, instead, the received ACK message is handed to the ACK processing means 134. When the received ACK message contains an RTCE option field, the ACK processing means 134 first refers to the round trip counter echo value field ti_rtce value of the RTCE option field. When the ti_rtce value is equal to the RTC value at that point (Yes in step X4-1 in the same drawing), the RTC value is counted up by one (step X4 - 2 in the same drawing). In this case, since accumulation confirmation is returned in a proper order for the transmitted data segments (No in steps S3 and S10 in the same drawing), the ACK processing means 134 deletes, from the transmission buffer, data for which the delivery has been confirmed by accumulation confirmation, edits the transmission segment list so that the transmission segment list reflects the content of the accumulation confirmation (when the transmission segment list contains a list element for which the delivery has been confirmed by the accumulation confirmation, the ACK processing means 134 deletes this list element), updates the snd_cwnd value, and sets the snd_una and p_max_seq values to the ti_ack -value for which accumulation confirmation has been made by this ACK message, followed by a request to the data segment transmission processing means 121 for transmission (steps S20, X5, and S22 to S23 in the same drawing).

When a data segment transmitted from the data segment transmission processing means 121 has been lost with the other transmitted data segments having been received in the order of transmission by the data segment reception processing means 231, the data segment reception processing means 231 receives data segments other than the lost data segment. Upon the reception of data segments having sequence numbers after the sequence number of the lost data segment, the ACK transmission processing means 221, which has been informed of the received data segment, generates duplicate ACK, containing an SACK option reporting the reception of the data segment, and transmits the duplicate ACK to the transmitter 1. In the ACK reception processing means 13, upon the reception of the SACK option-containing duplicate ACK, the SACK option processing means 133 first performs processing in such a manner that the transmission segment list reflects the information notified by the SACK option (the deletion of a list element of a data segment notified of the delivery from the transmission segment list) (Yes in step S1 and step X1 in Fig. 11), and hands the duplicate ACK to the ACK processing means 134. Upon the reception of the duplicate ACK, the ACK processing means 134 counts up the counter value dupacks of the counter for the number of times of reception of duplicate ACK (No in step S3, Yes in step S10, execution of step S11, and No in step S12 in the same drawing). When the number of times of the reception of duplicate ACK has reached the specified number of times rxmtthresh (Yes in step S12 in the same drawing), the ACK processing means 134 retransmits one data segment located after the data segment for which the accumulation confirmation has been made by the duplicate ACK, and edits the transmission segment list in such a manner that the transmission segment list reflects the retransmission of the data segment (step X9 in the same drawing), followed by initialization of various variables for error control processing (step S14 in the same drawing). In the initialization of variables for error control processing, snd_max is stored in p_max_seq, the estimated stay data size snd_nxt-snd_una-dupacks*segsz is set in pipe, and the half value (snd_cwnd/2) of the congestion window size utilized up to this point is set in ssthresh and the congestion window size snd_cwnd. Here segsz refers to MSS.

Thereafter, the data segment transmission processing means 121 and the ACK reception processing means 13 perform error control processing until the accumulation of the data segment stored in p_max_seq is confirmed.

In the error control processing, regarding the received ACK message, when the accumulation confirmation of the ACK message does not update the data segments for which the accumulation confirmation has been made up to this stage (Yes in each of steps S3 and S30 and No in step S31 in the same drawing), the ACK processing means 134 reduces the pipe value by segsz, and makes a request to the data segment transmission processing means 121 for transmission (step S37 and step S36 in the same drawing). On the other hand, when the ACK processing means 134 has received an ACK message for the update of the accumulation confirmation which has been made up to this stage (Yes in each of steps S3, S30, and S31 in the same drawing), the ACK processing means 134 deletes the accumulation confirmed data segments from the transmission buffer (step S32 in the same drawing), performs processing so as for the transmission segment list to reflect the content of the accumulation confirmation (the deletion of a list element containing data segment, for which delivery confirmation has been made by accumulation confirmation, from the transmission segment list) (step X6 in the same drawing), reduces the pipe value by an extent corresponding to the size of data contained in the list element deleted in the above step X6) (step X7 in the same drawing), sets the snd_una value to ti_ack (step S35 in the same drawing), and makes a request to the data segment transmission processing means 12 for transmission (step S36 in the same drawing).

When the congestion window pipe value is smaller than the snd_cwnd value, the data segment transmission processing means 121, to which the request for transmission has been made during error control, generates and transmits a data segment (Yes in steps S40 and S50 in Fig. 10). In this case, the data segment transmission processing means 121 first searches the transmission segment list for whether or not there is data to be retransmitted. When data to be retransmitted is present (Yes in step X12 in the same drawing), the data segment transmission processing means 121 generates a data segment thereof (step S52 in the same drawing), deletes the list element corresponding to the generated data segment from the transmission segment list (step X13 in the same drawing), and reduces the pipe value by an extent corresponding to the size of data contained in the list element deleted in the step X13, that is, by an extent corresponding to the size of the generated data segment (step X14 in the same drawing). On the other hand, when the data to be retransmitted is absent (No in step X12 in the same drawing) and, at the same time. when there is data to be transmitted (Yes in step S53 in the same drawing), a succeeding new data segment is prepared (step S54 in the same drawing). In this case, the data to be retransmitted refers to data stored in a list element, in the transmission segment list, that has an rt value which is two or more smaller than the current round trip counter RTC value. The data segment transmission processing means 121 selects such data one by one from the leading part of the transmission segment list. Specifically, the data segment transmission processing means 121 searches leading list elements in the transmission segment list for a list element which is rt ≤ RTC - 2. If a list element satisfying this requirement is present, then the data segment transmission processing means 121 regards the range of start to end in this list element as the retransmission object.

In both retransmission data segments and new data segments, the pipe value is increased by an extent corresponding to the size of the data segment (step S55 in the same drawing). An RTC option field is added to the data segment, and the current round trip counter RTC value is set in the round trip counter value field ti_rtc (step X15 in the same drawing). A list element indicating the content of the data segment transmission (wherein the start and end values are respectively the sequence numbers of the leading and tail data in data contained in the data segment and the rt value is the ti_rtc value of the data segment) is prepared, and the list element is added to the tail of the transmission segment list (step X16 in the same drawing), followed by the transmission of the data segment (step S56 in the same drawing).

When the accumulation confirmation of the data segment having the sequence number stored in p_max_seq has been made, the data segment transmission processing means 121 and the ACK reception processing means 13 terminate the error control. Upon the reception of the above ACK message (Yes in step S3 and No in step S30 in Fig. 11), the ACK processing means 134, as with the usual ACK processing, deletes the delivery confirmed segment from the transmission buffer (step S20 in the same drawing), deletes the list element having the content of the accumulation confirmed data from the transmission segment list (step X5 in the same drawing), updates various variables for the error control (step s22 in the same drawing), and makes a request to the data segment transmission processing means 121 for transmission (step S23 in the same drawing).

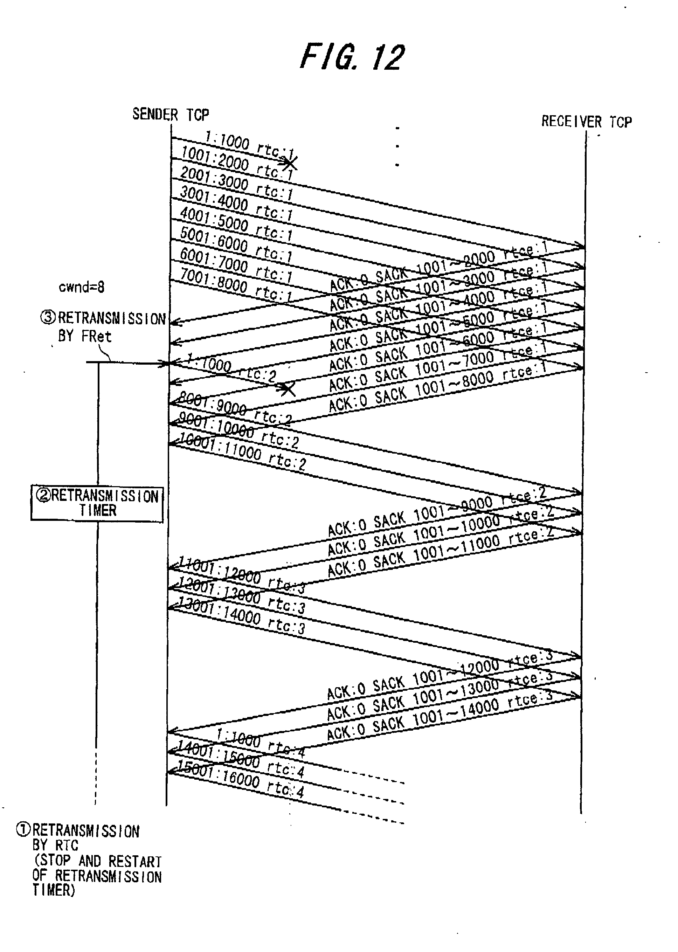

Thus, in the first preferred embodiment, a round trip counter is introduced, a round trip counter value is incorporated into a data segment transmitted, the relationship between the transmitted data segment and the round trip counter value at the time of the transmission of the data segment is stored, and the value of a round trip counter echo value field contained in an ACK message is utilized. According to this construction, the loss of the retransmitted data segment can be detected, the data segment, which has been found to be lost, can be again retransmitted, and the throughput performance can be improved. For example, in the same situation as the sequence shown in Fig. 5 described above in connection with the conventional techniques, as shown in Fig. 12, the loss of the retransmitted data segment 1 : 1000 is detected through the utilization of RTC value received/transmitted in succeeding data segments, and the data segment 1 : 1000 can be again retransmitted without the necessity of waiting for the time-out of the retransmission timer (in Fig. 12, retransmission is again carried out at rtc = 4).

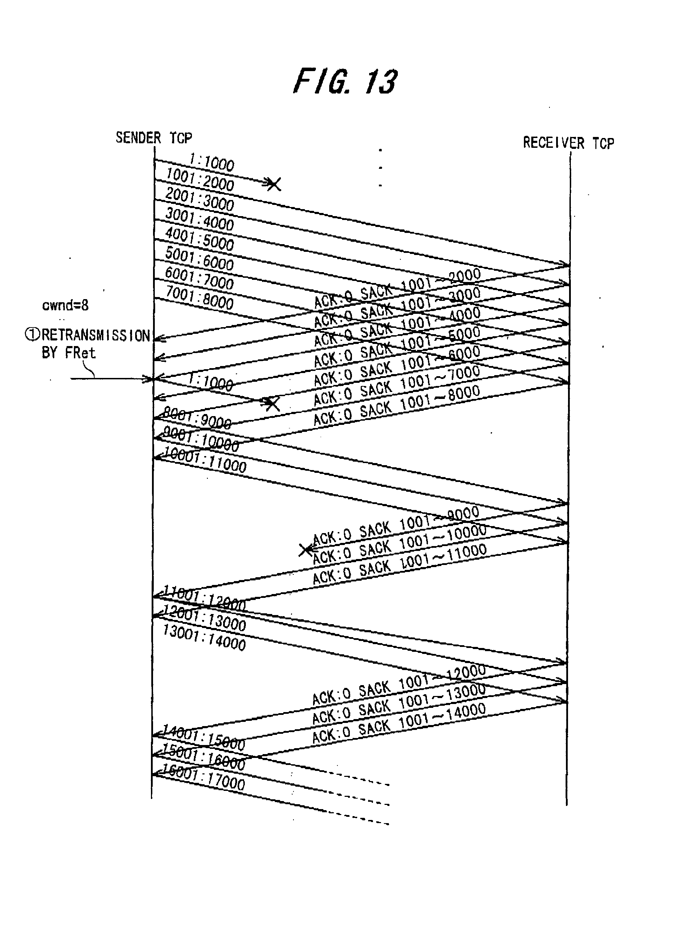

Further, in deleting a list element from the transmission segment list, the subtraction of the size of the data segment indicated by the deleted list element from the pipe can offer an advantage that, even when an ACK message during error control processing has been lost, unlike the conventional techniques wherein one MSS congestion widow cannot be used, this one MSS congestion window can be utilized. This can improve the throughput performance. For example, in the same situation as the sequence shown in Fig. 6 described above in connection with the conventional techniques, after the loss of one ACK message, one MSS congestion window cannot be used. By contrast, in the first preferred embodiment of the invention, as shown in Fig. 13, even after the loss of an ACK message, the occurrence of the situation, that, in the reception of succeeding ACK messages, the one MSS congestion window cannot be used, can be avoided.

The first preferred embodiment of the invention adopts a construction comprising: a transmitter 1 provided with application service execution means 11 which performs only data transmission; and a receiver 2 provided with application service execution means 21 which performs only the reception of data. Alternatively, a construction may be adopted wherein application service execution means, which performs transmission/reception of data, is provided in one device and, in addition, the device further comprises data segment transmission processing means 121, data segment reception processing means 231, ACK transmission processing means 221, ACK reception processing means 13, packet transmission means 14, and packet reception means 15. This construction has the same effects as the first preferred embodiment of the invention and can perform transmission/reception of data in one device.

Further, in this case, a method may be adopted wherein, in the two options shown in Fig. 9, 4 is adopted as the length field value, a value of a new option identifier is used in the kind field, and a round trip counter option field containing a round trip counter value field and a round trip counter echo value field is defined after the length field. According to this method, the size of the option field for transmission/reception of the round trip counter value in both directions of transmission and reception can be optimized.

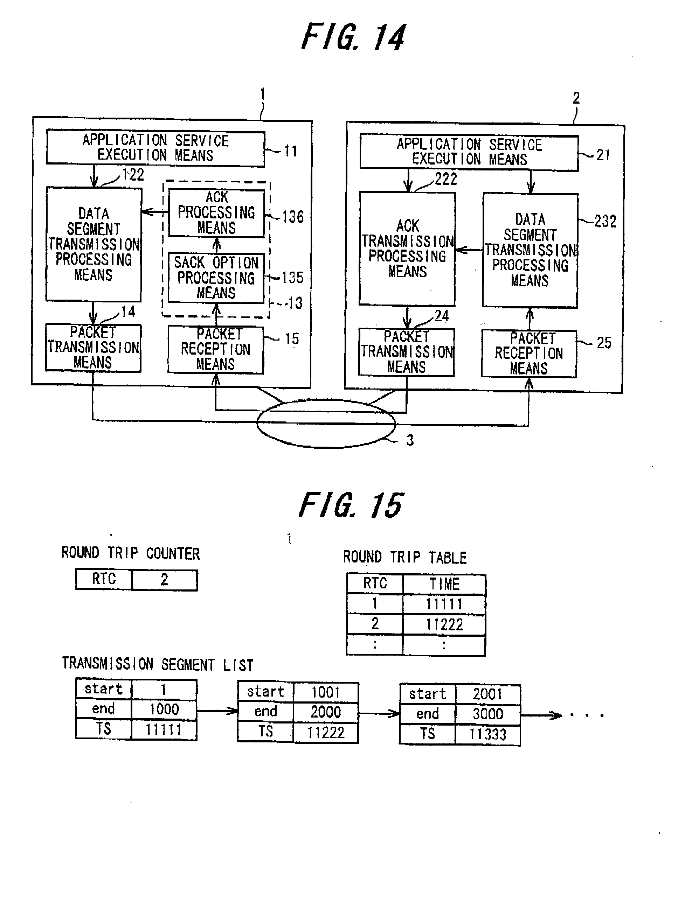

Next, the second preferred embodiment of the invention will be explained in conjunction with Figs. 14 to 18, In the above first preferred embodiment, a round trip counter RTC is introduced into the transmitter 1, the data segment transmitted in the transmitter 1 is managed in relationship with the RTC value at the time of the transmission of the data segment, and the RTC value is transmitted/received through the RTC field of the data segment and the RTCE field of the ACK message returned from the receiver 2. In the second preferred embodiment, as with the first preferred embodiment, a round trip counter RTC is introduced into the transmitter 1. In the second preferred embodiment, however, the transmission/reception of the RTC value is carried out through the utilization of TCP time stamp option specified in "TCP Extensions for High Performance," RFC 1323.

The construction of the second preferred embodiment of the invention is shown in Fig. 14. In this construction, the transmitter 1, the receiver 2, the connection form of the network 3, the application service execution means 11, the packet transmission means 14, and the packet reception means 15 in the transmitter 1, and the application service execution means 21, the packet transmission means 24, and the packet reception means 25 in the receiver 2 are the same as those in the first preferred embodiment. The second preferred embodiment, however, is different from the first preferred embodiment in data segment transmission processing means 122, SACK option processing means 135, and ACK processing means 136 in the transmitter 1 and ACK transmission processing means 222 and data segment reception processing means 232 in the receiver 2.

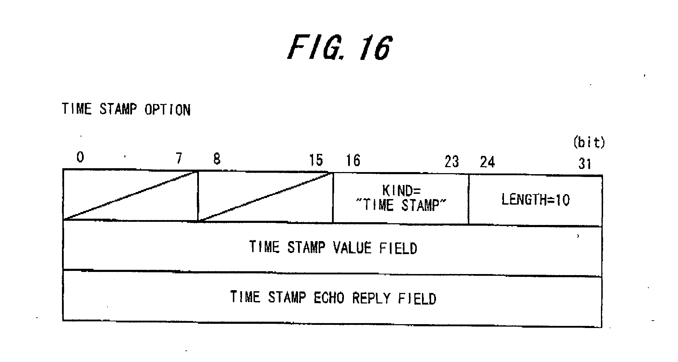

In the data segment transmission processing means 122 and the ACK reception processing means 13, the same round trip counter RTC is used in the first preferred embodiment. In this case, however, the construction of list elements in the transmission segment list is different from that in the first preferred embodiment. Further, a round trip table for recording the round trip counter value and the time is newly provided (Fig. 15). The list element in the transmission segment list according to the second preferred embodiment, as with the list element according to the first preferred embodiment, stores information concerning the transmitted data segment and stores the sequence numbers of the first and final data of data contained in the corresponding data segment respectively in "start" and "end." The list element according to the second preferred embodiment is different from the list element according to the first preferred embodiment in that a time option field (Fig. 16) is added to the data segment and the list element stores the value of the time stamp value field (time stamp value field (TSval field) in Fig. 16; hereinafter referred to as "ti_tsval field") in the time stamp option added to the data segment corresponding to "TS" in the list element. The round trip table is a table of record comprising a round trip counter (RTC) field and a time field. Each round trip counter value is stored in the RTC field, and, for the round trip counter value in the RTC field, the TSval field value ti_tsval of the time stamp option added to the first transmitted data segment in this round trip counter value is stored in the time field.

when the status is not in error control processing, that is, when there is data to be transmitted within the scope of the congestion control and flow control, as with the data segment transmission processing means 121 according to the first preferred embodiment, the data segment transmission processing means 122 generates and transmits a data segment. In this case, in the second preferred embodiment, a time stamp option is added to each data segment, the current time is stored in the ti_tsval field, the list element for the data segment transmission according to the second preferred embodiment of the invention is generated, and the generated list element is added to the tail of the transmission segment list. For the current round trip counter value, when the time of this value is not recorded in the round trip table, the value added to the ti_tsval field in the data segment is recorded as the time filed value,

Further, also when the status is in error control processing, as with the data segment transmission processing means 121 according to the first preferred embodiment of the invention, the data segment transmission processing means 122 retransmits or newly transmits a data segment having a size up to pipe·snd_cwnd in the case of snd_cwnd ≥ pipe, and, at time of transmission, updates the pipe value. In generating the data segment to be retransmitted or to be newly transmitted, the data segment transmission processing means 122 adds a time stamp option to the data segment, generates a list element for data segment transmission according to the second preferred embodiment, and adds the generated list element to the tail of the transmission segment list. Further, for the current round trip counter value, when the time of the value is not recorded in the round trip table, the value added to the ti_tsval field in the data segment is recorded as the value of the time field.

As with the data segment reception processing means 231 described in connection with the first preferred embodiment, the data segment reception means 232 receives data segments, which have been received from the packet reception means 25 and transmitted from the data segment transmission processing means 122, stores the received data in a proper order in the reception buffer, and notifies the ACK transmission processing means 222 of the information of the received data segments. When the received data segment has a time stamp option attached thereto, this information is also handed to the ACK transmission processing means 222.

The ACK transmission processing means 222 prepares an ACK message based on the information of the data segment notified by the data segment reception processing means 232, and hands the ACK message to the packet transmission means 24. When omission is found in data contained in the data segments received up to this point and several data blocks are present, the ACK transmission processing means 222 performs the notification of the data blocks by the SACK option in the same manner as described above in connection with the conventional techniques. When the information of the data segment received from the data segment reception processing means 232 has a time stamp option attached thereto, a time stamp option is added to the generated ACK message, and the value of ti_tsval field of the notified time stamp option is stored in the time stamp echo reply field (time stamp echo reply field in Fig. 16; hereinafter referred to as "ti_tsecr field").

The operation of the data segment reception processing means 232 and the ACK transmission processing means 222 is the same as the operation of the TCP stack corresponding to the SACK option and the time stamp option in the conventional techniques.

The ACK reception processing means 13 is means for processing the ACK message, which has been received from the packet reception means 15 and transmitted from the ACK transmission means 222, and comprises SACK option processing means 135 and ACK processing means 136. When the ACK message received from the packet reception means 15 has an SACK option attached thereto, as with the SACK option processing means 133 according to the first preferred embodiment, the SACK option processing means 135 performs processing in such a manner that the transmission segment list reflects the content. Specifically, a list element containing data segment for which delivery confirmation has been made by the SACK option is deleted from the transmission segment list. Further, when the status is under error control processing, the pipe value is reduced by an extent corresponding to the size of the data . contained in the deleted list element.

When the received ACK message contains a time stamp option field and, at the same time, when the ti_tsecr value of the time stamp option field is equal to or larger than the value of the time field of a record having the current RTC value as the RTC field value in the round trip table (this value is represented by RTTable[RTC]; i.e., RTTable[x] represents the value of the time field in the case where the RTC field of the round trip table is x), the ACK processing means 136 first counts up the RTC value by one. Processing after that is the same as the processing by the ACK processing means 134 in the first preferred embodiment of the invention. Specifically, when the status is not in error control processing. that is, when the status is in slow start or congestion avoidance, the ACK processing means 136 monitors duplicate ACK, and. when a specified number of times of duplicate ACK (rxmtthresh) have been successively received, performs FRet processing. In this case, data just after data, for which the accumulation has been confirmed by the duplicate ACK, is retransmitted. In this case, unlike the ACK processing means 134 in the first preferred embodiment, the ACK processing means 136 adds a time stamp option to the data segment to be transmitted, deletes a list element having information concerning the data segment of data transmitted from the transmission segment list. adds a list element having information concerning the data segment of data transmitted (a list element wherein "start" and "end" respectively have the sequence number values of the first and final data contained in the data segment and "TS" has the value of ti_tsval added to the data segment) to the tail of the transmission segment list, and, when the time corresponding to the RTC value at that point is not set in the round trip table, sets the ti_tsval value in the time field. AS with the ACK processing means 134 according to the first preferred embodiment, the ACK processing means 136 then performs setting of various variables. When the status is in error control processing, the processing by the ACK processing means 136 is quite the same as the processing by the ACK processing means 134 in the first preferred embodiment, except that the transmission segment list operated is changed to the transmission segment list according to the second preferred embodiment of the invention.

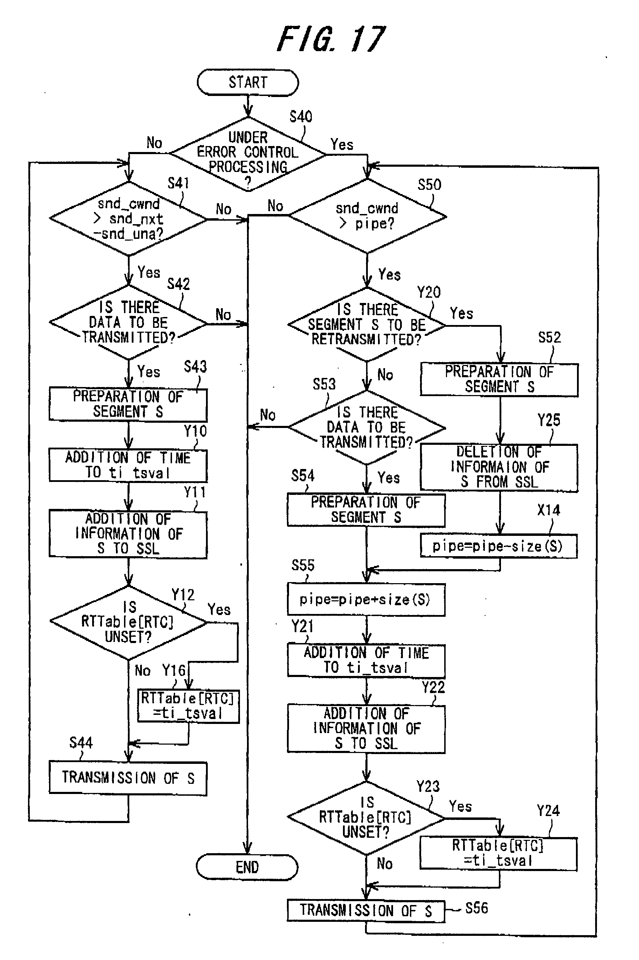

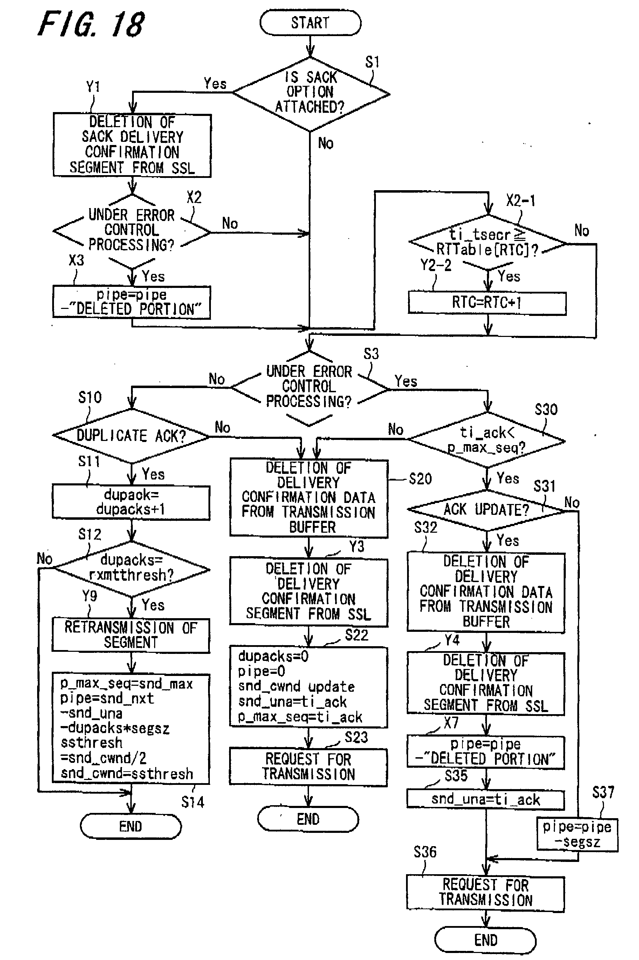

Next, the operation of the second preferred embodiment of the invention will be explained in conjunction with Figs. 17 and 18. Figs. 17 and 18 show the flow of processing at the time of data segment transmission and processing at the time of ACK message reception in the transmitter 1. However, for example, flow control using the reception window size notified by the receiver 2, the calculation of time-out value of the retransmission control timer, and the update of the congestion window are not directly related to the invention, and, thus, the description thereof will be omitted.

When the status is not in error control processing, that is, when the status is in slow start or congestion avoidance (No in step S40 in Fig, 17), the data segment transmission processing means 122 transmits data segments within the scope of the congestion control and flow control. In this case, a time stamp option is added to the data segment, and information concerning the data segment is stored in the transmission segment list (steps S41 to S43 and Y10 and Y11 in the same drawing). In the round trip table, when the time is not set in the time field of a record having the current RTC value as the RTC field value (Yes in step Y12 in the same drawing), the value of ti_tsval of the data segment is set in the time field of the record (step Y13 in the same drawing), followed by the transmission of the data segment (step S44 in the same drawing). Thereafter, when data segments or ACK messages transferred are not lost and, at the same time, when the order of arrival thereof is not changed, the data segment reception processing means 232 and the ACK transmission processing means 222 receive data segments and generate and transmit an ACK message for delivery confirmation. In this case, the ACK transmission processing means 222 adds a time stamp option field to each ACK message, and the value of the ti_tsval field in time stamp option added to the object data segment for the transmission of the ACK message is stored in the ti_tsecr field of the time stamp option field. In this case, since no SACK option is added, upon the reception' of the ACK message, in the ACK reception processing means 13, the SACK option processing means 135 does not perform processing (No in step S1 in Fig. 18) and, instead, the received ACK message is handed to the ACK processing means 136.

When the received ACK message contains a time stamp option field, the ACK processing means 136 first refers to the value of the ti_tsecr filed in the time stamp option field. When the ti_tsecr value is equal to or larger than RTTable[RTC] which is the value of the time field of a record having the RTC value at that time in the round trip table as the RTC field value (Yes in step Y2-1 in the same drawing), the ACK processing means 136 counts up the RTC value by one (step Y2-2 in the same drawing). In this case, since accumulation confirmation is returned in a proper order for the transmitted data segments (No in steps S3 and S10 in the same drawing), the ACK processing means 136 deletes, from the transmission buffer, data for which the delivery has been confirmed by accumulation confirmation (step S20 in the same drawing) and edits the transmission segment list so that the transmission segment list reflects the content of the accumulation confirmation (when the transmission segment list contains a list element for which the delivery has been confirmed by the accumulation confirmation, the ACK processing means 136 deletes this list element) (step Y3 in the same drawing). Thereafter, as with the ACK processing means 134 according to the first preferred embodiment, the ACK processing means 136 performs setting of various variables, and makes a request to the data segment transmission processing means 122 for transmission (steps S22 and S23 in the same drawing).

When a data segment transmitted from the data segment transmission processing means 122 has been lost with the other transmitted data segments having been received in the order of transmission by the data segment reception processing means 232, the data segment reception processing means 232 receives data segments other than the lost data segment. Regarding the reception of data segments having sequence numbers after the sequence number of the lost data segment, the ACK transmission processing means 222, which has been informed of the received data segment, generates duplicate ACK containing an SACK option reporting the reception of the data segment, and transmits the duplicate ACK to the transmitter 1. In the ACK reception processing means 13, upon the reception of the SACK option-containing duplicate ACK, the SACK option processing means 135 performs processing in such a manner that the transmission segment list reflects the information notified by the SACK option (the deletion of a list element of data segment, for which the delivery has been notified, from the transmission segment list) (Yes in step S1 and step Y1 in the same drawing), and hands the duplicate ACK to the ACK processing means 136. Upon the reception of the- duplicate ACK, the ACK processing means 136 counts up dupacks of the counter for the number of times of reception of duplicate ACK (No in step S3, Yes in step S10, execution of step S11, and No in step S12 in the same drawing). When the number of times of the reception of duplicate ACK has reached the specified number of times rxmtthresh (Yes in step S12 in the same drawing), the ACK processing means 136 retransmits one data segment located after the data segment for which the accumulation confirmation has been made by the duplicate ACK, edits the transmission segment list in such a manner that the transmission segment list reflects the retransmission of the data segment, and, when the value of RTTable[RTC] is not set, sets the value of ti_tsval of the retransmitted data segment in the record (step Y9 in the same drawing). As with the ACK processing means 134 in the first preferred embodiment, the ACK processing means 136 then performs the initialization of various variables for error control processing (step S14 in the same drawing).

Thereafter, the data segment transmission processing means 122 and the ACK reception processing means 13 perform error control processing until the accumulation of the data segment stored in p_max seq is confirmed.

The error control processing by the ACK processing means 136 is quite the same as the error control processing by the ACK processing means 134 according to the first preferred embodiment, except that the transmission segment list operated is changed to the transmission segment list according to the second preferred embodiment. Thus, detailed explanation of the error control process will be omitted.

When the congestion window pipe value is smaller than the snd_cwnd value, the data segment transmission processing means 122, to which the request for transmission has been made during error control, generates and transmits a data segment (Yes in steps S40 and S50 in Fig. 11). In this case, the data segment transmission processing means 122 first searches the transmission segment list for whether or not there is data to be retransmitted. When data to be retransmitted is present (Yes in step Y20 in the same drawing), the data segment transmission processing means 122 generates a data segment thereof (step S52 in the same drawing), deletes the list element corresponding to the generated data segment from the transmission segment list (step Y25 in the same drawing), and reduces the pipe value by an extent corresponding to the size of data contained in the list element deleted in the step Y25, that is, by an extent corresponding to the size of the generated data segment (step X14 in the same drawing). On the other hand, when the data to be retransmitted is absent (No in step X12 in the same drawing) and, at the same time, when there is data to be transmitted (Yes in step S53 in the same drawing), a succeeding new data segment is generated (step S54 in the same drawing). In this case, the data to be retransmitted refers to data stored in a list element, in the transmission segment list, that has a TS field value which is equal to or smaller than RTTable[RTC-2], i.e., the value of the time field of a record having, in the RTC field in the round trip table, an RTC value of two smaller than the current round trip counter RTC value. The data segment transmission processing means 122 selects such data one by one from the leading part of the transmission segment list. Specifically, the data segment transmission processing means 122 searches leading list elements in the transmission segment list for a list element which is TS ≤ RTTable[RTC-2]. If a list element satisfying this requirement is present, then the data segment transmission processing means 122 regards the range of start to end in this list element as the retransmission object.

In both retransmission data segments and new data segments, the pipe value is increased by an extent corresponding to the size of the data segment (step s55 in the same drawing). A time stamp option field is added to the data segment, and the current time is set in the ti_tsval field (step Y21 in the same drawing) . A list element indicating the content of the data segment transmission (wherein the start and end values are respectively the sequence numbers of the leading and tail data in data contained in the data segment and the TS value is the ti_tsval value of the data segment) is prepared, and the list element is added to the tail of the transmission segment list (step Y22 in the same drawing). Further, for the record having the current RTC value as the RTC field value in the round trip table, when no value is set in the time field (Yes in step Y23 in the same drawing), the ti_tsval value of the data segment is set in the time field (step Y24 in the same drawing). Finally, the data segment is transmitted (step S56 in the same drawing).

Thus, in the second preferred embodiment of the invention, a round trip counter is introduced, and the relationship between the round trip counter value and the ti_tsval value of the time stamp option added to the transmitted data segment is managed in the transmitter 1. The ti_tsval of the transmitted data segment is stored, and a time stamp option is added to data segments and ACK messages to be transmitted/received. According to this construction, the loss of the retransmitted data segment can be detected, the data segment, which has been detected to be lost, can be again retransmitted, and the throughput performance can be improved. For example, in the same situation as the sequence shown in Fig. 5 described above in connection with the conventional techniques, the same sequence as shown in Fig. 12 described above in connection with the first preferred embodiment can be realized.

The second preferred embodiment of the invention adopts a construction comprising: a transmitter 1 provided with application service execution means 11 which performs only data transmission; and a receiver 2 provided with application service execution means 21 which performs only the reception of data. Alternatively, as with the first preferred embodiment, in the second preferred embodiment, a construction can be adopted which can realize transmission/reception of data in one device.

Main features of the above-described data communication systems (data communication devices) according to the preferred embodiments of the invention will be summarized.

The first communication system has a transmitter comprising: means (121 in Fig. 7) which has a counter for counting the number of round trips of data packets transmitted, incorporates, as round trip notification information, the current counter value into the data packet transmitted, stores the relationship between each transmitted data packet and the counter value at the time of the transmission of the data packet, and, when the stored counter value is two or more smaller than the current counter value, judges that the data packet corresponding to the stored counter value has been lost, followed by the retransmission of the data packet which has been judged to be lost; means (221 and 231 in Fig. 7) which incorporates, as round trip response information, the counter value, contained as the round trip notification information in the received data packet, into an ACK packet for the received data packet; and means (134 in Fig. 7) which increases the counter value by one in the case where the value contained as the round trip response information in the received ACK packet is equal to the counter value. The adoption of the above construction to detect the loss of a retransmitted data packet and to retransmit the data packet, which has been detected to be lost, can realize improved throughput performance.

The second communication system comprises: means (122 in Fig. 14) which has a counter for counting the number of round trips of data packets transmitted, incorporates, as time notification information, the current time into the data packet transmitted, stores, for each transmitted data packet, the relationship between the data packet and the time at the point of the transmission of the data packet in a first table (the round trip table in Fig. 15), stores, for each counter value in the counter, the relationship between the counter value and the time at the point of the transmission of the first data packet after the counter has counted said counter value in a second table (the transmission segment list in Fig. 15), and, when the value of the time stored in the first table is smaller than the value of the time corresponding to a counter value which is two smaller than the current counter value stored in the second table, judges that the data packet corresponding to the time stored in the first table has been lost, followed by the retransmission of the data packet which has been judged to be lost; means (222 and 232 in Fig. 14) which incorporates, as time response information, the time, contained as the time notification information in the received data packet, into an ACK packet for the received data packet; and means (136 in Fig. 14) which increases the counter value by one in the case where the value of the time contained as the time response information in the received ACK packet is equal to or larger than the value of the current time stored, in the second table, in the relationship with the current counter value. The adoption of the above construction to detect the loss of a retransmitted data packet and to retransmit the data packet, which has been detected to be lost, can realize improved throughput performance.

The third communication system comprises means (133 and 134 in Fig. 7 and 135 and 136 in Fig. 14) which releases, from a transmission window, a closed window to an extent corresponding to the total size of data, for which delivery confirmation has been newly made by ACK packets received from the data receiver during the error control, and to thereby render the released window transmittable. The adoption of the above construction can realize improved throughput performance.

The preferred embodiments of the invention are not limited to the above embodiments only. For example, individual devices and individual elements within each device may be disposed in a combined, divided, or dispersed state. Further, the data communication device or data communication system according to the invention may be divided into a transmitter portion and a receiver portion which are then distributed as products. Furthermore, the communication device or transmitter or receiver according to the invention may comprise a computer and a peripheral(s) thereof and a program executable by the computer. The whole or a part of the program executable by the computer can also be distributed or utilized through a computer readable recording medium or a communication line.

The effects of the invention will be summarized.

The first effect is that, when a retransmitted data segment has been lost, the throughput performance is better than that of the conventional techniques. This effect is attained by the introduction of a round trip counter for counting the number of round trips of data packets transmitted. The introduction of the round trip counter is advantageous in that, for a data segment lost at the time of retransmission, the loss of the data segment can be detected by the fact that, even when the value of the round trip counter increased two or more, the delivery has not been confirmed and, based on this, the data segment, which has been detected to be lost, can be retransmitted.

The second effect is that, when the order of arrival of data segments transmitted during error control processing has been changed, or when the size of a transmission window is not satisfactorily large, the throughput performance is better than that of the conventional techniques. This effect can be attained by using the number of round trips, which is independent of the transmission window size, for judgment on whether or not a data segment is to be retransmitted. Although the judgment on the retransmission using the number of round trips cannot fully cope with a change in the order of arrival of data segments, upon a change in the order of arrival of data segments in an identical round trip, useless retransmission does not occur. By virtue of this, an improvement in throughput performance can be realized over the conventional techniques.

The third effect is that, when an ACK message from a data receiver (for example, receiver TCP) has been lost during error control processing, the throughput performance is better than that of the conventional techniques. This effect can be attained by the adoption of a construction such that, in estimating the size of data, which stays in a network during error control processing, a closed window is released from a transmission window to an extent corresponding to the total size of data, for which delivery confirmation has been newly made by ACK packets received from the data receiver during the error control, to render the released window transmittable.

The invention has been described in detail with particular reference to preferred embodiments, but it will be understood that variations and modifications can be effected within the scope of the invention as set forth in the appended claims.

## Claims

1. A data communication system comprising a data transmitter, a data receiver, and a network for connecting the data transmitter to the data receiver, wherein said data transmitter transmits data packets to the data receiver, said data receiver transmits an ACK packet for informing the data transmitter of the confirmation of the delivery of the received data packet, and said data transmitter detects the loss of the transmitted data packet based on the content of the ACK packet and retransmits the data packet, which has been detected to be lost, whereby error control of data packets is carried out,
said data transmitter comprising:
a counter for counting the number of round trips of data packets transmitted; and
means for storing, for each transmitted data packet, the relationship between the data packet and the counter value at the time of the transmission of the data packet and, when the stored counter value is two or more smaller than the current counter value, judges that the data packet corresponding to the stored counter value has been lost, followed by the retransmission of the data packet which has been judged to be lost.

2. The data communication system according to claim 1, wherein
the data transmitter further comprises means for incorporating, as round trip notification information, the current counter value into the data packet transmitted,
the data receiver further comprises means for incorporating, as round trip response information, the counter value, contained as the round trip notification information in the received data packet, into an ACK packet for the received data packet, and
the data transmitter further comprises means for increasing the counter value by one in the case where the value contained as the round trip response information in the received ACK packet is equal to said counter value.

3. A data communication system comprising a data transmitter, a data receiver, and a network for connecting the data transmitter to the data receiver, wherein said data transmitter transmits data packets to the data receiver, said data receiver transmits an ACK packet for informing the data transmitter of the confirmation of the delivery of the received data packet, and said data transmitter detects the loss of the transmitted data packet based on the content of the ACK packet and retransmits the data packet, which has been detected to be lost, whereby error control of data packets is carried out,
said data transmitter comprising:
a counter for counting the number of round trips of data packets transmitted;
first and second tables for storing predetermined data;
means for storing, for each transmitted data packet, the relationship between the data packet and the time at the point of the transmission of the data packet in the first table;
means for storing, in the second table, for each counter value in the counter, the relationship between the counter value and the time at the point of the transmission of the first data packet after the counter has indicated said counter value; and
means which, when the value of the time stored in the first table is smaller than the value of the time corresponding to a counter value which is two smaller than the current counter value stored in the second table, judges that the data packet corresponding to the time stored in the first table has been lost, followed by the retransmission of the data packet which has been judged to be lost.

4. The data communication system according to claim 3, wherein
the data transmitter further comprises means for incorporating, as time notification information, the current time into the data packet transmitted,
the data receiver further comprises means for incorporating, as time response information, the time, contained as the time notification information in the received data packet, into an ACK packet for the received data packet, and
the data transmitter further comprises means for increasing the counter value by one in the case where the time contained as the time response information in the received ACK packet is equal to or larger than the current time value stored, in the second table, in the relationship with the current counter value.

5. A data communication system comprising a data transmitter, a data receiver, and a network for connecting the data transmitter to the data receiver, wherein said data transmitter transmits data packets to the data receiver, said data receiver transmits an ACK packet for informing the data transmitter of the confirmation of the delivery of the received data packet, and said data transmitter detects the loss of the transmitted data packet based on the content of the ACK packet and retransmits the data packet, which has been detected to be lost, whereby error control of data packets is carried out and, wherein, during error control in its period between the detection of the loss of a data packet and the confirmation of the delivery of the data packet by the data transmitter, transmission flow control is carried out by a transmission window,
said data transmitter functioning to release, from the transmission window, a closed window to an extent corresponding to the total size of data, for which delivery confirmation has been newly made by ACK packets received from the data receiver during the error control, thereby rendering the released window transmittable.

6. A data communication method comprising the steps of: providing a data communication system comprising a data transmitter, a data receiver, and a network for connecting the data transmitter to the data receiver; transmitting data packets by the data transmitter to the data receiver; transmitting an ACK packet for informing, by the data receiver, the data transmitter of the confirmation of the delivery of the received data packet; detecting the loss of the transmitted data packet, by the data transmitter, based on the content of the ACK packet; and retransmitting the data packet, which has been detected to be lost, by the data transmitter, thereby performing error control of data packets, wherein
the data transmitter is provided with a counter for counting the number of round trips of data packets transmitted, and
for each transmitted data packet, the relationship between the data packet and the counter value at the point of the transmission of the data packet is stored, and, when the stored counter value is two or more smaller than the current counter value at that time, the data packet corresponding to the stored counter value is regarded as having been lost, followed by the retransmission of the lost data packet.

7. The data communication method according to claim 6, wherein
the data transmitter incorporates, as round trip notification information, the current counter value into the data packet transmitted,
the data receiver incorporates, as round trip response information, the counter value, contained as the round trip notification information in the received data packet, into an ACK packet for the received data packet, and
the data transmitter increases the counter value by one in the case where the value contained as the round trip response information in the received ACK packet is equal to said counter value.

8. A data communication method comprising the steps of : providing a data communication system comprising a data transmitter, a data receiver, and a network for connecting the data transmitter to the data receiver; transmitting data packets by the data transmitter to the data receiver; transmitting, by the data receiver, an ACK packet for informing the data transmitter of the confirmation of the delivery of the received data packet; detecting the loss of the transmitted data packet, by the data transmitter, based on the content of the ACK packet; and retransmitting the data packet, which has been detected to be lost, by the data transmitter, thereby performing error control of data packets, wherein
the data transmitter is provided with a counter for counting the number of round trips of data packets transmitted, and first and second tables for storing predetermined data, for each transmitted data packet, the relationship between the data packet and the time at the point of the transmission of the data packet is stored in the first table,
for each counter value in the counter, the relationship between the counter value and the time at the point of the transmission of the first data packet after the counter has indicated said counter value is stored in the second table, and
when the value of the time stored in the first table is smaller than the value of the time corresponding to a counter value which is two smaller than the current counter value stored in the second table, the data packet corresponding to the time stored in the first table is regarded as having been lost, followed by the retransmission of the data packet -which has been judged to be lost,

9. The data communication method according to claim 8, wherein
the data transmitter incorporates, as time notification information, the time at that point into the data packet transmitted,
the data receiver incorporates, as time response information, the time, contained as the time notification information in the received data packet, into an ACK packet for the received data packet, and
the data transmitter increases the counter value by one in the case where the time contained as the time response information in the received ACK packet is equal to or larger than the time stored in the relationship with the current counter value stored in the second table.

10. A data communication method comprising the steps of: providing a data communication system comprising a data transmitter, a data receiver, and a network for connecting the data transmitter to the data receiver; transmitting data packets by the data transmitter to the data receiver; transmitting, by the data receiver, an ACK packet for informing the data transmitter of the confirmation of the delivery of the received data packet; detecting the loss of the transmitted data packet, by the data transmitter, based on the Content of the ACK packet; retransmitting the data packet, which has been detected to be lost, by the data transmitter, thereby performing error control of data packets; and performing transmission flow control by a transmission window, during error control in its period between the detection of the loss of a data packet and the confirmation of the delivery of the data packet by the data transmitter, wherein
the data transmitter functions to release, from the transmission window, a closed window to an extent corresponding to the total size of data, for which delivery confirmation has been newly made by ACK packets received from the data receiver during the error control, and consequently renders the released window transmittable.

11. A computer readable recording medium comprising, recorded thereon, a program which is used in executing the data communication method according to any one of claims 6 to 10 by means of a computer.
